(19) Europäisches Patentamt / European Patent Office / Office européen des brevets

(11) **EP 2 227 495 B1**

(12) **EUROPEAN PATENT SPECIFICATION**

(45) Date of publication and mention
of the grant of the patent:
**23.01.2013 Bulletin 2013/04**

(51) Int Cl.:
**C08F 10/14** (2006.01)     **C08F 8/00** (2006.01)
**C08F 10/00** (2006.01)

(21) Application number: **08869453.4**

(22) Date of filing: **19.12.2008**

(86) International application number:
**PCT/US2008/087581**

(87) International publication number:
**WO 2009/088701 (16.07.2009 Gazette 2009/29)**

(54) **PROCESS FOR POLYMERIZING OLEFIN-BASED POLYMERS**

VERFAHREN ZUR POLYMERISIERUNG VON POLYMEREN AUF OLEFINBASIS

PROCÉDÉ DE POLYMÉRISATION DE POLYMÈRES À BASE D'OLÉFINES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.12.2007 US 17986 P**

(43) Date of publication of application:
**15.09.2010 Bulletin 2010/37**

(73) Proprietor: **Dow Global Technologies LLC
Midland, MI 48674 (US)**

(72) Inventors:
• **JORGENSEN, Robert
Scott Depot
WV 25560 (US)**
• **WAGNER, Burkhard
Highland Park
NJ 08904 (US)**

• **TURNER, Michael
Missouri City
TX 77459 (US)**

(74) Representative: **Hayes, Adrian Chetwynd
Boult Wade Tennant
Verulam Gardens
70 Gray's Inn Road
London WC1X 8BT (GB)**

(56) References cited:
EP-A1- 1 544 218          WO-A1-2008/100368
WO-A1-2009/023111          US-A1- 2003 008 980
US-A1- 2005 148 742          US-A1- 2007 073 012
US-B1- 6 265 513          US-B1- 6 265 513
US-B1- 7 078 467

Remarks:
The file contains technical information submitted after
the application was filed and not included in this
specification

**Description**

The invention provides continuity improvement for the production of very high molecular weight olefin-based polymers in gas phase polymerization reactors.

The invention also provides a means to further control the molecular weight distribution of polymers produced with mixed metal Ziegler-Natta type catalysts in gas phase polymerization reactors, independent of catalyst composition changes.

BACKGROUND OF INVENTION

Catalysts which produce broad molecular weight distributions and high molecular weight tails are desirable for use in both slurry and gas phase polymerization processes, to produce improved products, especially HDPE blow molding resins, where resin swell (caused by high molecular weight chains) is important. However, the production of these polymers with very high molecular weight resin fractions, has been difficult due to reactor operability issues, manifested by very high levels of static (that can cause fines to adhere to surfaces, resulting in poor control and eventual sheeting), formation of reactor agglomerates, and overall system fouling.

In order to access the improved product properties made available by such catalysts (specifically, a catalyst which has multiple components, one of which produces very high molecular weight), reactor continuity and agglomerate formation must be resolved. The problem of static "cling" is exacerbated further, when the catalyst system has a positive activation energy, which further increasing the tendency to sheet and form agglomerates, thus forcing premature reactor shutdown.

It has been discovered that utilizing a mixture of two solid continuity improvement agents, co-fed to the reactor, separately from the catalyst, allows operation to continue for long periods, without sheet or agglomerate formation that require reactor shutdown. Surprisingly, catalyst activity was generally unaffected when the continuity agent was added within a prescribed ratio to bed weight. The capability to control static level was also demonstrated. Removal of the continuity aid results in massive fouling of the reactor, and requires cessation of operation, even though symptoms, such as static, are not present. The continuity improvement agents (Continuity Aid or CA) function in the presence of aluminum alkyl cocatalysts that are generally required to achieve full activity of Ziegler type catalysts. Similar methods have been evaluated with non-Ziegler type catalysts, such as metallocenes and post-metallocene catalysts, which are generally used without feed of a cocatalyst. These methods were not thought to be applicable to catalyst systems in which cocatalysts are fed to the reactor.

There is a need for the production of high molecular weight resins, particularly resins with high molecular weight fractions of >$10^6$ g/mole, and preferably as high as $10^7$ g/mole, or more, in amounts greater than two weight percent, and preferably greater than four or five weight percent. The production of these types of polymers, with high molecular weight fractions, in fluidized bed, gas phase reactors, has generally been rendered more difficult by agglomerate and sheet formations, which cause reactor shutdowns. There are a variety of methods that can ameliorate the tendency to form sheets/chunks, ranging from operating in condensed mode, through addition of anti-static agents, or operation at temperatures sufficiently low, such that polymer fusion cannot occur. However, all of these techniques have drawbacks. Operation in condensing mode requires high levels of an induced condensing agent, as well as operation at high overall polymer production rates, which can make the reactor even more sensitive to sheeting conditions. In addition, the elimination or amelioration of static potential does not necessarily equate with good long term performance of the reaction system. Thus, the mere elimination of static does not guarantee that sheeting, agglomerate formation or other operational impairments will not occur.

Many discussions of anti-static agents are present in the art, however the mere mention of a compound as an anti-static agent does not mean that the specific compound will function in an olefin polymerization reactor. In fact, many of the anti-static agents that are commercially available rely on the presence of water to function. However, water is a strong poison for all known Ziegler catalyst systems.

U.S. Publication No. 20070073012 pertains to methods for seed bed treatment, before performance of a polymerization reaction (for example, an olefin polymerization reaction), to improve continuity of the reaction. This publication discloses a method in which at least one continuity additive and a seed bed are pre-loaded into a reactor. Examples of continuity additives include metal stearates and amines.

European Patent EP1082351B1 discloses a catalyst delivery method for introducing a supported, bulky ligand metallocene-type catalyst system to a reactor for polymerizing one or more olefin(s). In particular, a supported metallocene-type catalyst system is introduced into a polymerization reactor by, and in the presence of, a carrier solution containing an antistatic agent and a liquid diluent. Antistatic agents include various amine compounds and other compounds.

U.S. Patent 6,111,034 discloses the addition of water to a gas phase olefin polymerization reactor, in amounts greater than 3 ppmv, and which permits an increase in the level of condensable gas, and facilitates operation of the reactor at an elevated dew point by ameliorating electrostatic phenomena in the reactor. This patent discloses static control polymerization and several anti-static agents, including ethoxylated fatty acid amines, quaternary ammonium salts, chromium containing compounds, and fatty acids of alkali and alkaline earth metals. Much emphasis is given to the use of water as one component of the static control methodology.

U.S. Patent 6,022,935 discloses the use of an anti-static agent co-fed to a reactor using metallocene catalysts. See also European Patent Application No. EP803514B1.

U.S. Publication No. 20020065374 is directed to a method of polymerizing monomers in a gas phase reactor having a recycle system. This patent discloses the use of anti-static and anti-fouling coatings on the end of catalyst injection tubes, particularly for use with liquid polymerization catalysts.

U.S. Patent 6,359,083 discloses a process for producing polyolefins, wherein solids are conveyed by a gas, throughout the polymerization process, to improve operability. This patent generically discloses that anti-static agents can be added to the polymerization reactor, or the catalyst itself, and that they may be solids. No specific examples are given.

U.S. Patent 5,731,392 discloses the use of two different agents, water and silicates, as a means to adjust static charge in a polymerization reaction system, with emphasis on the silicates.

U.S. Patent 6,548,610 is directed to a method and apparatus for controlling static charges in a fluidized bed, olefin polymerization reactor. The method involves monitoring charges within the bed, and introducing a static control agent into the reactor, in an amount to create and maintain neutral charges in the bed.

U.S. Publication No. 20020103072 is directed to a polymerization catalyst comprising a bulky ligand. This patent discloses methods for controlling static with bulky ligand metallocene type catalysts.

There are other methods that can result in reduced amounts of sheeting/agglomerate formation, however, all of these have negative affects on the efficiency of the process. One method is to run at very low ethylene partial pressure, such that, even with stagnant zones in the reactor, there is insufficient reactant available to cause sheet/agglomerate formation. The obvious drawback to this method is that the overall efficiency of the catalyst system will be substantially reduced. Concomitant with this reduced catalyst efficiency will be reduced polymer particle size, leading to higher fines levels and further reduction in operability. Thus, one must then run the reactor at reduced rates as well, or feed substantially more catalyst. Either approach is economically deficient.

Another method is to run the reactor at reduced temperature, further increasing the distance between the reaction temperature and the melting or sticking point of the polymer in production. So, for example, one could run the reactor at 50°C, instead of more desirable higher temperatures. This also forces operation at reduced rates, again leading to poor economics for the process, and, unless the catalyst is extremely long-lived, renders multiple reactor operation extremely difficult.

Another method is to run the reactor in condensed mode, however even this is no guarantee that sheeting/agglomerate formation will not occur, especially during the run-up to condensing mode, that is, as polymerization rates are increased, the energy flux in the polymerizing bed must increase, leading to the potential of sheet/agglomerate formation; before polymerization rates have increased sufficiently to achieve condensing mode operation. Additionally, high levels of static are generally not ameliorated, until a substantial percentage condensing has occurred. Very high levels of induced condensing agent must be added as well, actually reducing the sticking temperature of the polymer, making sheeting and agglomerate formation even more likely.

Another potential solution is to wash the resultant catalyst, removing at least some of the compounds that tend to generate static. This however, adds several additional steps to the catalyst preparation, greatly increases the cost and complexity of catalyst preparation, increases the potential variability of the catalyst, and, as will be demonstrated in the examples, does not prevent sheeting and chunking during production of resins with very high molecular weight fractions.

None of the above alternative methods allow production of polymer at useful rates in commercial scale reactors. As discussed, there is a need to not only to control static, but also to produce high molecular weigh polymer, at high polymerization rates, using efficient polymerization processes, without forming agglomerates in the reactor. These needs and others have been met by the following invention.

In addition, the capability to control molecular weight distribution of an olefin polymerization system is highly desirable. General techniques for modifying molecular weight distribution are known in the art, however these typically involve manipulating variables associated with the actual manufacture of the catalyst system. Manipulation of polymerization process variables allows for some change in molecular weight distribution, however these are limited due to economics (i.e. too low a reaction temperature results in poor throughput), physical factors (reaction temperature, for example, can be limiting if polymer becomes soft/sticky) and process limitations, such as total pressure, monomer solubility in the polymer and the like. The ability to control polymer properties, such as MWD, using a component such as a co-feed or a co-catalyst would be highly desirable.

EP480434A2 discloses a solid component of a catalyst, which includes magnesium, halogen and titanium, is obtainable by (i) dissolving a dialkyl magnesium compound, a silicon halide, and, optionally, an alkyl halide in an inert organic solvent, and maintaining contact until a granular solid precipitates; (ii) reacting the granular solid with a titanium halide, alkoxide or halogen-alkoxide, to produce a solid catalyst component; and (iii) activating this solid component by contacting it with alkyl aluminium halide if a titanium alkoxide or halogen-alkoxide has been used in step (ii). Higher aluminum alkyls, like tri-n-hexyl aluminum are disclosed as increasing the melt flow ratio.

US4368305 discloses a process for producing polyolefins, and particularly polyethylene, which are high in molecular weight or which are wide in molecular weight distribution, and thus suitable for extrusion or blow molding purposes, the process comprising polymerizing olefins, such as ethylene, by the use of a catalytic system, which is comprised of a solid catalytic component obtained by mixing or interacting oxygen-containing organometal compounds or halides of (a) vanadium and (b) hafnium, or a solid catalytic component obtained by mixing or interacting oxygen-containing organometal compounds or halides of (A) vanadium, (B) hafnium and (C) titanium, and (D) an organoaluminum compound.

US6054406 discloses a polymetallic supported catalyst component comprising an activated anhydrous MgCl2 solid support, which has been treated with at least one treatment of at least two halogen-containing transition metal compounds, wherein one is a halogen-containing titanium metal compound and one is a halogen-containing non-titanium transition metal compound, optionally, in the presence of an electron donor and the processes for producing the component. The catalyst is prepared by reacting this supported catalyst component with an organometallic cocatalyst, optionally in the presence of an electron donor.

US 7348383 discloses a Ziegler-Natta catalyst composition comprising a solid mixture formed by halogenation of: A1) a spray-dried catalyst precursor comprising the reaction product of a magnesium compound, a non-metallocene titanium compound, and at least one non-metallocene compound of a transition metal other than titanium, with A2) an organoaluminium halide halogenating agent; a method of preparing, precursors for use therein; and olefin polymerization processes using the same.

Patent application US 2005/148742 discloses a process to control static activity in a as phase polymerisation process in which a Ziegler-Natta catalyst can be used and in which a continuity additive mixture is used, which corresponds to the mixture of the present invention. However US 2005/148742 is silent about a catalyst comprising halogens of Mg, Ti and Hf in combination.

There is a need to control inherent molecular weight distribution of a polymer through the manipulation of the cocatalyst composition added to the polymerization reactor. There is a further need for the manipulation of polymer properties without having to change catalyst formulation. These needs and others have been met by the following invention.

SUMMARY OF INVENTION

The invention provides a process for producing an olefin-based polymer said process comprising polymerizing at least one monomer, in the gas phase, in the presence of at least the following components:

A) at least one catalyst wherein the catalyst comprises mg, Ti, Hf and optionally Zr, metals, and wherein each metal is present as a halogen;
B) at least one cocatalyst;
C) a composition comprising at least one compound selected from formula (I), and/or at least one compound selected from formula (II):

$$(R1CO_2)_2 \, AlOH \qquad (I),$$

$$(R2)_x N(R3OH)_y \qquad (II);$$

wherein R1 is a hydrocarbon radical containing from 13 to 25 carbons;
R2 is a hydrocarbon radical containing from 14 to 26 carbons;
R3 is a hydrocarbon radical containing from 1 to 4 carbons; and
$x + y = 3$, and x has a value of 1 or 2.

BRIEF DESCRIPTION OF THE DRAWINGS

Figure 1 represents potential at the reactor wall (volts versus time profile) of a static response of a polymerization of an ethylene/1-hexene copolymer, without the addition of a Continuity Aid.

Figure 2 represents potential at the reactor wall (volts versus time profile) of a static response of a polymerization of an ethylene/1-hexene copolymer, without the addition of a Continuity Aid.

Figure 3 represents potential at the reactor wall (volts versus time profile) of a static response of a polymerization of an ethylene/1-hexene copolymer, with the addition of a Continuity Aid.

Figure 4 represents potential at the reactor wall (volts versus time profile) of a static response of a polymerization of an ethylene/1-hexene copolymer, with the addition of a Continuity Aid.

Figure 5 depicts the effect of Continuity Aid feed on linked reactor operation (upper trace is G-7 static (volts) and lower trace is G-1 static (volts)).

Figure 6 depicts polymerization production rate (calc.) versus time.

DETAILED DESCRIPTION OF THE INVENTION

The invention provides a process for producing an olefin-based polymer, said process comprising polymerizing at least one monomer, in the gas phase, in the presence of at least the following components:

A) at least one catalyst wherein the catalyst comprises mg, Ti, Hf and optionally Zr, metals, and wherein each metal is present as a halogen;
B) at least one cocatalyst;
C) a composition comprising at least one compound selected from formula (I), and at least one compound selected from formula (II):

$$(R1CO_2)_2AlOH \qquad (I),$$

$$(R2)_xN(R3OH)_y \qquad (II);$$

wherein R1 is a hydrocarbon radical containing from 13 to 25 carbons;
R2 is a hydrocarbon radical containing from 14 to 26 carbons;
R3 is a hydrocarbon radical containing from 1 to 4 carbons; and
x + y = 3, and x has a value of 1 or 2.

The invention also provides a process for producing an olefin-based polymer, said process comprising polymerizing at least one monomer, in the gas phase, in the presence of at least the following components:

A) at least one catalyst wherein the catalyst comprises mg, Ti, Hf and optionally Zr, metals, and wherein each metal is present as a halogen;
B) at least one cocatalyst;
C) a composition comprising at least one compound selected from formula (I), or at least one compound selected from formula (II):

$$(R1CO_2)_2 AlOH \qquad (I),$$

$$(R2)_xN(R3OH)_y \qquad (II);$$

wherein R1 is a hydrocarbon radical containing from 13 to 25 carbons;
R2 is a hydrocarbon radical containing from 14 to 26 carbons;
R3 is a hydrocarbon radical containing from 1 to 4 carbons; and
x + y = 3, and x has a value of 1 or 2.

In one embodiment, for an inventive process, the gas phase polymerization takes place in at least one reactor.
In one embodiment, for an inventive process, for formula (I) ($(R1CO_2)_2 AlOH$), R1 is a hydrocarbon radical containing from 13 to 20 carbons, and preferably from 13 to 17 carbons.
In one embodiment, for an inventive process, for formule (II) ($(R^2)_xN(R3OH)_y$), R2 is a hydrocarbon radical containing from 14 to 20 carbons, preferably with 14 to 17; R3 is a hydrocarbon radical containing from 1 to 4 carbons, preferably with 1 to 3 carbons; and x + y = 3, and x has a value of 1 or 2.
In one embodiment, for an inventive process, the composition of Component C further comprises an inert hydrocarbon carrier such as isopentane, hexane or mineral oil.

In one embodiment, for an inventive process, the composition of Component C further comprises a mineral oil.

In one embodiments, for an inventive process, the composition of Component C consists of at least one compound selected from formula (I), at least one compound selected from formula (II), and an inert hydrocarbon carrier such as isopentane, hexane or mineral oil. In a further embodiment, the weight ratio of "the compound selected from formula (I)" to the "compound selected from, formula (II)" is 1 to 1.

In one embodiment, for an inventive process, the composition of Component C consists of at least one compound selected from formula (I), at least one compound selected from formula (II), and a mineral oil. In a further embodiment, the weight ratio of "the compound selected from formula (I)" to the "compound selected from formula (II)" is 1 to 1.

In one embodiment, for an inventive process, the composition of Component C comprises at least one compound selected from formula (I), at least one compound selected from formula (II), and the weight ratio of "the compound selected from formula (I)" to the "compound selected from formula (II)'" is 1 to 1.

In one embodiment, for an inventive process, the olefin-based polymer, and preferably an ethylene-based polymer, has at least a two weight percent fraction (based on the total weight of the polymer) that has a molecular weight of greater than $10^6$ g/mole, as determined by the respective area fractions of either the conventional or LS (Light Scattering) GPC profile of the polymer. In a further embodiment, the respective area fractions are of the conventional GPC profile. In another embodiment, the respective area fractions are of the LS GPC profile.

In one embodiment, for an inventive process, the olefin-based polymer, and preferably an ethylene-based polymer, has at least a four weight percent fraction (based on the total weight of the polymer) that has a molecular weight of greater than $10^6$ g/mole, as determined by the respective area fractions of either the conventional or LS GPC profile of the polymer: In a further embodiment, the respective area fractions are of the conventional GPC profile. In another embodiment, the respective area fractions are of the LS GPC profile.

In one embodiment, for an inventive process, Component C is fed to the reactor separately from the catalyst and cocatalyst.

In one embodiment, for an inventive process, Component C is fed directly to the reactor.

In one embodiment, for an inventive process, Component C is initially fed to the reactor simultaneously with the start of the catalyst feed.

In one embodiment, for an inventive process, Component C is a solid as fed to the reactor.

In one embodiment, for an inventive process, Component C is a slurry as fed to the reactor.

In one embodiment, for an inventive process, Component C comprises compound I and compound II, which are each in solid form as fed to the reactor. In a further embodiment, Component C is a slurry.

In one embodiment, for an inventive process, Component C comprises compound I, which is in solid form as fed to the reactor. In a further embodiment, Component C is a slurry.

In one embodiment, for an inventive process, Component C comprises compound II, which is in solid form as fed to the reactor. In a further embodiment, Component C is a slurry.

The catalyst is a Ziegler/Natta catalyst. The catalyst comprises Mg, Ti, Hf, and optionally Zr, metals. Each metal is present as a halogen.

The catalyst is a Ziegler/Natta catalyst. The catalyst comprises Mg, Ti, and Hf metals. Each metal is present as a halogen.

In one embodiment, for an inventive process, the catalyst is produced by spray drying a solution comprising the active metals of the catalyst in an alcoholic solvent, and then subsequently halogenating the active metals.

In one embodiment, for an inventive process, the olefin-based polymer is polymerized in at least one reactor. In a further embodiment, the olefin-based polymer is an ethylene-based polymer.

In one embodiment, for an inventive process, the olefin-based polymer is produced in two reactors. In a further embodiment, a first polymer is produced in a first reactor, and the first polymer is transferred to a second reactor, wherein a lower molecular weight polymer is produced in the presence of the first polymer, to form the olefin-based polymer. In a further embodiment, the olefin-based polymer is an ethylene-based polymer. In a further embodiment, the catalyst is fed only to the first reactor.

In one embodiment, for an inventive process, the catalyst is fed only to a first reactor. In a further embodiment, the olefin-based polymer is an ethylene-based polymer,

In one embodiment for an inventive process, the olefin-based polymer has a molecular weight distribution greater than, or equal to, 3. In a further embodiment, the olefin-based polymer is an ethylene-based polymer.

In one embodiment, for an inventive process, the olefin-based polymer has a molecular weight distribution less than, or equal to, 5. In a further embodiment, the olefin-based polymer is an ethylene-based polymer.

In a preferred embodiment, for an inventive process, the olefin-based polymer is an ethylene-based polymer. In a further embodiment, the ethylene-based polymer is an ethylene/$\alpha$-olefin interpolymer. In a further embodiment, the $\alpha$-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, the polymer has a high load melt index (I21) less than, or equal to, 2 g/10 min. In a further embodiment, the olefin-based polymer is an ethylene-based polymer.

An inventive process may comprise a combination of two or more embodiments as described herein.

The olefin-based polymer of an inventive process may comprise a combination of two or more embodiments as described herein.

In one embodiment, a catalyst used in the invention can be described as a catalyst precursor composition and a final catalyst composition. The catalyst precursor comprises a spray dried composition prepared by dissolution of a magnesium compound, a titanium compound, a hafnium compound and/or a zirconium compound in an alcoholic solvent in the presence of a filler/bulking agent, In a further embodiment, the filler or bulking agent is of an average particle size no more than 25 percent of the average particle size of the final catalyst precursor particles. The transition metal compounds may be halides, alkoxides, mixed alkoxide/2,4 pentandionates, and mixtures of such. The only requirement is solubility in the alcoholic solvent. Especially preferred titanium compounds are $TiCl_3$ (either hydrogen or aluminum reduced) and $Ti(2,4 pentanedionate)_2(OR)_2$, where R can be ethyl, isopropyl, n-propyl or n-butyl. Preferred Zr and Hf compounds are the chlorides or alkoxides (for example, ethoxide, propoxide, butoxide). Preferred magnesium compounds are $MgCl_2$ and magnesium ethyl carbonate. This catalyst precursor composition is halogenated to produce the final active catalyst used in the invention. This catalyst composition is of no or very low activity in the absence of cocatalyst. It has been discovered that the inherent molecular weight distribution of this catalyst system can be changed through manipulation of the cocatalyst composition added to the polymerization reactor. This capability allows the manipulation of polymer properties without having to change catalyst formulation. The cocatalyst is a trialkylaluminum compounds, especially triethylaluminum, triisobutyl aluminum, tri-n-hexyl aluminum, tri-n-butyl aluminum and tri-n-octyl aluminum, or mixtures thereof. The cocatalyst is chosen to increase or decrease the breadth of the molecular weight distribution, independently of the catalyst formulation. The cocatalyst is added separately to the polymerization reactor, although in one embodiment it may be mixed with the catalyst feed as both are directly fed into the polymerization reactor. When two reactors are connected in series with catalyst feed only to the first reactor, cocatalyst may optionally be fed only to the first reactor, or a different cocatalyst may be fed to the second reactor.

In one embodiment, for an inventive process, the at least one monomer is polymerized in a gas phase process. In a further embodiment, the polymerization takes place in at least one reactor.

In one embodiment, for an inventive process, the polymerization takes place in at least one reactor.

In a preferred embodiment, for an inventive process, component C is present during the polymerization.

In a preferred embodiment, for an inventive process, the melt flow ratio (MFR) of the olefin-based polymer is manipulated, independently of reaction conditions, by the trialkylaluminum compound. In a further embodiment, the melt flow ratio of the olefin-based polymer is manipulated, independently of reaction conditions, by the trialkylaluminum compound and its concentration in the reactor. In a further embodiment, the olefin-based polymer is an ethylene-based polymer.

The catalyst comprises Mg, Ti, Hf, and optionally Zr, metals. Each metal is present as a halogen.

The catalyst comprises Mg, Ti, and Hf metals. Each metal is present as a halogen.

In one embodiment, for an inventive process, the catalyst is produced by spray drying a solution comprising the active metals of the catalyst in an alcoholic solvent, and then subsequently halogenating the active metals.

In one embodiment, for an inventive process, the olefin-based polymer is polymerized in at least one reactor. In a further embodiment, the olefin-based polymer is an ethylene-based polymer.

In one embodiment, for an inventive process, the olefin-based polymer is produced in two reactors. In a further embodiment, a first polymer is produced in a first reactor, and the first polymer is transferred to a second reactor, wherein a lower molecular weight polymer is produced in the presence of the first polymer, to form the olefin-based polymer. In a further embodiment, the olefin-based polymer is an ethylene-based polymer. In a further embodiment, the catalyst is fed only to the first reactor.

In one embodiment, for an inventive process, the trialkylaluminum compound is selected from tri-n-hexyl aluminum, triethylaluminum or triisobutylaluminum. In a further embodiment, the trialkylaluminum compound is tri-n-hexyl aluminum.

In a preferred embodiment, for an inventive process, the olefin-based polymer is an ethylene-based polymer. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, the ethylene-based polymer has a reference $I_{21}$ from 25 to 45, and the melt flow ratio ($I_{21}/I_2$) is varied by +/- 15% through changes in the trialkylaluminum. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, the ethylene-based polymer has a high load melt index, $I_{21}$, less than 100, and the melt flow ratio, $I_{21}/I_2$, greater than 30, preferably greater than 40. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octane; and more preferably 1-butene and 1-hexene.

In one embodiment, for an inventive process, the ethylene-based polymer has a high load melt index, $I_{21}$, less than 60, and a melt flow ratio, $I_{21}/I_2$, greater than 35, preferably greater than 45. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, the ethylene-based polymer has a high load melt index, $I_{21}$, less than 40, and a melt flow ratio, $I_{21}/I_2$, greater than 40, preferably greater than 50. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, the ethylene-based polymer has a bulk density (or apparent density) from 0.39 g/cc (24 lb/ft$^3$) to 0.55 g/cc (34 lb/ft$^3$), preferably from 0.41 g/cc (26 lb/ft$^3$) to 0.55 g/cc (34 lb/ft$^3$), as determined by ASTM D-1895. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1-hexene and 1-octene, and more preferably 1-butene and 1-hexene.

In one embodiment, for an inventive process, Component C is fed to the reactor separately from the catalyst and cocatalyst.

In one embodiment, for an inventive process, Component C is a solid as fed to the reactor.

In one embodiment, for an inventive process, Component C is a slurry as fed to the reactor.

In one embodiment, for an inventive process, Component C comprises compound I and compound II, which are each in solid form as fed to the reactor. In a further embodiment. Component C is a slurry.

In one embodiment, for an inventive process, Component C comprises compound I, which is in solid form as fed to the reactor, In a further embodiment, Component C is a slurry.

In one embodiment, for an inventive process, Component C comprises compound II, which is in solid form as fed to the reactor. In a further embodiment, Component C is a slurry.

In one embodiment, for an inventive process, for formula (I) ($(R1CO_2)_2$ AlOH), R1 is a hydrocarbon radical containing from 13 to 20 carbons, and preferably from 13 to 17 carbons.

In one embodiment, for an inventive process, for formula (II) ($(R2)_xN(R3OH)_y$), R2 is a hydrocarbon radical containing from 14 to 20 carbons, preferably with 14 to 17; R3 is a hydrocarbon radical containing from 1 to 4 carbons, preferably with 1 to 3 carbons; and x + y = 3, and x has a value of 1 or 2.

In one embodiment, for an inventive process, the composition of Component C further comprises an inert hydrocarbon carrier such as isopentane, hexane or mineral oil.

In one embodiment, for an inventive process, the composition of Component C further comprises a mineral oil.

In one embodiment, for an inventive process, the composition of Component C consists of at least one compound selected from formula (I), at least one compound selected from formula (II), and an inert hydrocarbon carrier such as isopentane, hexane or mineral oil. In a further embodiment, the weight ratio of "the compound selected from formula (I)" to the "compound selected from formula (II)" is 1 to 1.

In one embodiment, for an inventive process, the composition of Component C consists, of at least one compound selected from formula (I), at least one compound selected from formula (II), and a mineral oil. In a further embodiment, the weight ratio of "the compound selected from formula (I)" to the "compound selected from formula (II)" is 1 to 1.

In one embodiment for an inventive process, the composition of Component C comprises at least one compound selected from formula (I), at least one compound selected from formula (II), and the weight ratio of "the compound selected from formula (I)" to the "compound selected from formula (II)" is 1 to 1.

In one embodiment, for an inventive process, the olefin-based polymer, and preferably an ethylene-based polymer, has at least a two weight percent fraction (based on the total weight of the polymer) that has a molecular weight of greater than $10^6$ g/mole, as determined by the respective area fractions of either the conventional or LS (Light Scattering) GPC profile of the polymer. In a further embodiment, the respective area fractions are of the conventional GPC profile. In another embodiment, the respective area fractions are of the LS GPC profile.

In one embodiment, for an inventive process, the olefin-based polymer, and preferably an ethylene-based polymer, has at least a four weight percent fraction (based on the total weight of the polymer) that has a molecular weight of greater than $10^6$ g/mole, as determined by the respective area fractions of either the conventional or LS GPC profile of the polymer. In a further embodiment, the respective area fractions are of the conventional GPC profile. In another embodiment, the respective area fractions are of the LS GPC profile.

An inventive process may comprise a combination of two or more embodiments as described herein.

The olefin-based polymer of an inventive process may comprise a combination of two or more embodiments as described herein.

**Continuity Aids**

Surprisingly, it has been discovered that select types of continuity aids that both inhibit static generation, as well as prevent formation of sheets and agglomerates, will aid in the production of polymers with very high molecular weight fractions, that is greater than $10^6$ and preferably as high as $10^7$, or more, and in amounts greater than one, preferably greater than two weight percent, and more preferably greater than four or five weight percent, base on the weight of the polymer.

The continuity aid (CA) works particularly well in catalyst systems that have a so-called positive activation energy, that is, those in which the polymerization activity is positively affected by increasing reaction temperature. The invention also works especially well with catalysts that have very low deactivation rates, that is, with first order deactivation rate constants (Kd) of < 0.5 $Hr^{-1}$, and especially < 0.2 $Hr^{-1}$. These features, while desirable for high catalyst yield, are especially unwelcome if the system is prone to sheet or agglomerate formation. Any area of poor fluidization or stagnation will then become a prime area for hot spots, sheet and agglomerate formation, since the localized temperature will increase, further increasing the activity of the catalyst in the stagnant zone, leading to polymer fusion and requiring reactor shutdown.

It has been discovered that an continuity aid allows for smooth, trouble free operation of gas phase, fluidized bed polymerization systems while producing polymers with very high molecular weight fractions, in single or multiple linked reactors. These additives are preferably solids, or in solid form, at injection temperature into the reactor, and consist of compounds of the general formulas:

$$(R1CO_2)_2 \, AlOH, \qquad \text{Formula (I).}$$

where R1 is a hydrocarbon radical containing from 13 to 25 carbons

$$(R2)xN(R3OH)y, \qquad \text{Formula (II),}$$

where R2 is a hydrocarbon radical containing from 14 to 26 carbons; R3 is a hydrocarbon radical containing from 1 to 4 carbons, x + y = 3 and x has a value of 1 or 2.

Surprisingly, these additives function even in the presence of cocatalysts (typically trialkyl aluminum compounds), which are generally required to achieve full activity of Ziegler type catalysts, despite the presence of functionalities that would normally be reactive with the cocatalysts, for example, carbonyl, hydroxyl and amine.

Specific Ziegler catalyst types are described in US20070060725, along with variations that will be described further herein. The specific feature shared by the catalysts, useful in the invention is the inclusion of Zr and/or Hf active sites, to produce the high molecular weight portion of the polymer, and the alcoholic solvents used in the production of the catalytic solids.

Compounds of the form ROH are also known to be pro-static agents, thus using ROH compounds as solvents in the catalyst preparation process further increases the potential for high levels of static. Resins with very high molecular weights are also known to generate higher levels of static charging during production in gas phase fluidized bed reactors. Thus, while the resins are highly desirable, production of these materials is rendered much more difficult, due to the aforementioned attributes of the catalyst system and the specific resin. It has been discovered that the introduction of continuity additive to the polymerization reactor results in smooth, continuous operations, with minimal formation of agglomerates, and essential elimination of sheeting and chunk formation.

The exact method of action of these continuity additives is not fully understood. Based on one set of measurements, they appear to minimize static generation, however, the simple minimization of static (that is, such that static voltage in the fluid bed is near zero) is not sufficient to prevent agglomerate/sheet formation, since the mere cessation of continuity additive feed (CA), even with minimal static voltage, can result in rapid sheet formation and reactor shutdown. Thus, as discussed above, the use of the CA allows for the continuous production of the polymers.

As described previously, CA is generally a mixture of two components, both high molecular weight compounds containing amino and/or hydroxyl functionalities. The CA compounds are preferably solids or waxes. The preferred hydroxyl functionality is introduced as a compound of formula $((RCO_2)_2Al\text{-}OH)$ where R is a hydrocarbon radical from 13 to 25 carbons. The amino functionality is introduced as a compound of the formula $(R_2)_xN(R_3OH)_y$ where R2 is again a hydrocarbon radical from 14 to 26 carbons, and R3 is a hydrocarbon radical, for example, methyl, ethyl, n-propyl, n-butyl or isopropyl radical. Particularly preferred compounds are aluminum distearate and AS-990 (a commercially available stearyl ethoxyamine).

In one embodiment, the CA should be a "0.5 to 1" to "2 to 1" preferably "0.5 to 1" to "1 to1" [$(RCO_2)_2Al\text{-}OH)$ to $(R_2)_xN(R_3OH)_y$], by weight, mixture of these two components. In a further embodiment, the mixture is fed directly to the polymerizing reactor bed. An especially preferred ratio is 1 to 1.

In one embodiment, these components are fed as a slurry of the two solid components [$(RCO_2)_2Al$-OH) and $(R_2)_xN(R_3OH)_y$]. Mineral oil solvents, such as Hydrobrite 380, Kaydol and similar viscosity materials, are preferred carriers of the CA. This CA feed should be maintained at a temperature sufficiently low, such that both components remain as solids prior to feed into the reactor.

The preferred location for the CA feed is above the distributor plate, and in the lower 1/3 portion of the polymerizing bed, that is, the region wherein sheets are most likely to form. An effective amount of this material is fed to the reactor to promote good operation and minimize sheet and agglomerate formation in the reactor. If series reactor operation is practiced, that is, where the contents of a first gas phase reactor are passed into a second gas phase reactor, the CA is typically fed only to the first reactor in the series.

The CA and the catalyst are preferably fed at different locations in the reactor, that is, with some vertical distance separating the two, or, if fed at the same level in the fluidized bed, the injection points should preferably be at least $\pi/2$ radians separated. The CA and catalyst should not be physically mixed. Cocatalyst is also preferably injected directly into the fluidizing bed, however this is more for process safety issues. When injected into the bed, the cocatalyst should be separated, preferably by at least $\pi/2$ radians, from the CA (when injected at the same level), or with vertical displacement from the CA. The cocatalyst and CA should also not be fed as a mixed stream.

## Preferred Catalysts

The expression "catalyst" or "catalyst composition," as used herein, refers to transition metal compounds, or mixtures thereof, that are useful in catalyzing the polymerization of addition polymerizable monomers, generally in combination with one or more cocatalysts or activator compounds. Preferred catalysts are mixtures or complexes of non-metallocene transition metal compounds and magnesium compounds, such as magnesium chloride compounds, alternatively referred to as Ziegler Natta catalysts or Ziegler Natta type catalysts.

More specifically, the preferred catalyst compositions comprise magnesium dichloride or a magnesium compound that can be halogenated to magnesium dichloride, and having supported thereon a mixture of Group 4 metals, especially a mixture of titanium chlorides, zirconium chlorides and hafnium chlorides, combinations thereof, and titanium, zirconium and hafnium compounds that can be halogenated to the respective chloride. Although impregnation in an inert support may be practiced, the preferred method of preparation is by spray drying a solution comprising magnesium compound and the mixture of Group 4 metal compounds in a primary diluent, especially a diluent comprising one or more C2-C6 alcohols, and subsequently halogenating the resulting solid particles. Preferred transition metal halides are a mixture of titanium trichloride (which may be complexed with $AlCl_3$ if desired), zirconium tetrachloride and hafnium tetrachloride.

Preferred compounds that may be halogenated to the respective chloride are:

Magnesium-Magnesium Ethyl Carbonate ($Mg(C_2H_5CO_2)_2$
Hafnium-$Hf(OR)_{4-x}Cl_x$, where x is from 0 to 2, and R is methyl, ethyl, isopropyl, isobutyl or butyl.
Titanium-$Ti(OR)_{4-x}R1_x$, where x is 0 to 2 and R is methyl, ethyl, isopropyl, isobutyl or butyl, R1 is a chelating ligand, such as especially preferred 2,4 pentandione or Cl.
Zirconium- $Zr(OR)_{4-x}Cl_x$, where x is 0 to 2 and R is methyl, ethyl, isopropyl, isobutyl or butyl. The primary requirement is that the subsequent material (spray dried or supported) be dry and free flowing to allow for subsequent operations.

Preferred halogenating agents are organoaluminum halides, especially alkylaluminum sesquichlorides, such as ethyl aluminum sesquichloride ($Al_2(C_2H_5)_3Cl_3$). The relative quantities of magnesium dichloride, transition metal halides, and halogenating agent employed, as well as the identity of the halogenating agent, all affect the relative performance of the resulting catalyst composition.

These preferred catalysts for use in the invention also have several additional attributes, as follows: (a) they produce polymers with high molecular weight fractions greater than $10^6$ g/mole, (b) they have a relatively low decay rate, that is, a first order decay constant of less than 0.8 $Hr^{-1}$, (c) the catalyst particle size distribution has the span "(d90-d10)/d50" less than, or equal to, 2, and (d) they produce resins with high settled bulk density.

The preferred catalysts are also quite active at low added cocatalyst levels, with excellent polymerization activity occurring with added (via cocatalyst feed) Al/Ti mole ratios in the reactor of less than 35/1, and as low as 20/1, although higher amounts may be used. When used in multiple reactor systems, the preferred catalysts may retain full polymerization activity in the subsequent reactor(s), even in the absence of additional cocatalyst feed.

The preferred catalysts are prepared by dissolution of a magnesium compound, a titanium compound, a hafnium compound and/or a zirconium compound in an alcoholic solvent in the presence of a filler/bulking agent, if the composition is spray dried, or a support, such as a highly porous silica gel if the catalyst is physically contained within the pores of said support. The transition metal compounds may be halides, alkoxides, mixed alkoxide/2,4 pentandionates, and mixtures of such. The only requirement is solubility in the alcoholic solvent. Especially preferred titanium compounds are $TiCl_3$ (either hydrogen or aluminum reduced) and $Ti(2,4\ pentanedionate)_2(OR)_2$, where R can be ethyl, isopropyl, n-propyl or n-butyl. Preferred Zr and Hf compounds are the chlorides or alkoxides (for example, ethoxide, propoxide, butoxide). Preferred magnesium compounds are $MgCl_2$ and magnesium ethyl carbonate.

Additional optional components of the composition used to form the spray-dried catalyst precursors include the following:

> a) one or more fillers or bulking agents;
> b) one or more internal electron donors; and/or
> c) one or more secondary diluent compounds selected from the group consisting of siloxanes, polyalkylene glycols, C1-4 alkyl or phenyl ether or diether derivatives of polyalkylene glycols, and crown ethers.

Any solid finely dispersed material that is inert to the other components of the catalyst system and subsequent polymerization, can be employed as filler or bulking agent for the present compositions. Desirably, the filler provides bulk and strength to the resulting solid, spray-dried particles to prevent particle disintegration upon particle formation and drying. Suitable fillers can be organic or inorganic. Examples include silica, (especially fumed silica), boron nitride, titanium dioxide, zinc oxide, polystyrene, and calcium carbonate. Fumed hydrophobic, surface modified, silica is preferred, because it imparts high viscosity to the slurry and good strength to the spray-dried particles. The filler should be free of absorbed water, and is desirably surface modified as well. Surface modification, such as silane treatment, removes reactive hydroxyl or other functional groups from the filler.

The filler is not utilized to provide an inert support for deposition of catalyst composition. Accordingly, high surface area filler materials are not essential or desired for use. Ideally, the filler should have a surface area less than $20\ M^2/g$, more preferably less than $10\ M^2/g$. Suitable fillers should have an average particle size (D50) no greater than $50\ \mu m$, preferably no greater than $10\ \mu m$. Sufficient filler is preferably employed to produce a slurry suitable for spray-drying, that is, a mixture including a primary diluent that is liquid at normal atmospheric conditions but readily volatilized under reduced pressure or elevated temperature. Desirably the slurry contains such filler in an amount from 0 percent by weight to 15 percent by weight, preferably from 2.5 percent by weight to 10 percent by weight. Upon spray-drying, the resulting droplets produce discrete catalyst particles after evaporation of the primary diluent. Desirably, the amount of filler present in the resulting catalyst particles is an amount from 0 to 50 percent, preferably from 10 to 30 percent based on total composition weight. The spray-dried catalyst particles produced in this manner typically have an average particle size (D50) from 5 to 200 $\mu m$, preferably from 10 to 30 $\mu m$.

Secondary diluent compounds are desirably employed to prepare spray-dried products exhibiting a high degree of uniformity in particle size and sphericity. The resulting spray-dried catalyst compositions possess highly uniform composition and excellent catalyst activity, with reduced formation of fines. Additionally, certain of the foregoing secondary diluents may also act as internal electron donors when such component is desired to be included in the composition. In a preferred embodiment, the secondary diluent compound is selected from among siloxanes, polyalkylene glycols, C1-C4 alkyl or phenyl ether or diether derivatives of polyalkylene glycols, and crown ethers.

Preferred polyalkylene glycols include polyethylene glycol, containing from 2 to 5 alkyleneoxide repeat units. Siloxanes and crown ethers are particularly preferred secondary diluents because they can provide improvements in particle morphology, as well as increased activity, in comparison to polymerization reactions conducted without the presence of such siloxane or crown ether compound. Preferred siloxanes, include hexamethyldisiloxane, hexaethyldisiloxane and hexaphenyldisiloxane. Preferred crown ethers include18-crown-6-ether and 15-crown-5-ether. The secondary diluent is preferably present in the catalyst composition in an amount in the range from zero to 10 percent, based on total catalyst composition weight.

Materials which can be employed as supports, if the catalyst composition is prepared in that manner, are solid, particulate, porous materials, which are inert to the other components of the catalyst system, and inert during subsequent polymerization. Suitable support materials include inorganic materials, such as oxides of silicon and/or aluminum. Usually these materials have an average particle size from 10 $\mu m$ (microns) to 250 $\mu m$ (microns), preferably from 10 $\mu m$ (microns) to $\mu m$ 150 (microns), and a surface area of at least 3 square meters per gram, preferably at least 50 square meters per gram. Polymerization activity of the catalyst can be improved by employing a silica support having an average pore size of at least, 8 nm (80 Angstrom) units, preferably at least 10 nm(100 Angstrom) units. The support material should be dry, that it, free of absorbed water. Drying of the support material can be effected by heating, for example, at a temperature of at least 600°C, when silica is employed as the support. Alternatively, when silica is employed, it may be dried at a temperature of at least 200°C, and optionally treated with about one weight percent to about eight weight percent of one or more of aluminum alkyl, aluminum alkyl halide or alkyl zinc compounds. Suitable compounds have the formula $M(R_4)_zX_y$, where M is either Al or Zn; y is zero, if M is Zn; and z is 2; and if M is Al, z + y = 3, and has values from 2 and 3. R4 may be methyl, ethyl, isobutyl or n-hexyl. Ethyl groups are particularly preferred.

Suitably the precursor composition impregnated on the support contains from 3 percent by weight to 50 percent by weight, preferably from 15 percent by weight to 40 percent by weight, of the Mg/Ti/Hf/Zr catalyst component.

Spray-drying may be effected by any spray-drying method known in the art. One example of a suitable spray-drying method comprises atomizing the catalyst composition, optionally with heating, and drying the resulting droplets, Atomization is accomplished by means of any suitable atomizing device to form discrete droplets that upon drying form spherical or nearly spherical shaped particles. Atomization is preferably effected by passing a slurry of the catalyst composition through the atomizing device together with an inert drying gas, that is, a gas which is nonreactive under the conditions employed during atomization, and aids in removal, of volatile components. An atomizing nozzle or a centrifugal high speed disc can be employed to effect atomization, whereby there is created a spray or dispersion of droplets of the mixture. The volumetric flow of drying gas, if used, preferably considerably exceeds the volumetric flow of the slurry to effect atomization of the slurry and/or evaporation of the liquid medium. Ordinarily the drying gas is heated to a temperature as high as 200°C, to facilitate atomization and drying of the slurry; however, if the volumetric flow of drying gas is maintained at a very high level, it is possible to employ lower temperatures. Atomization pressures from 0.007 to 1-4mPa gauge (1 to 200 psig) are suitable. Alternately, reduced pressure in the spray recovery section of the dryer can be employed to effect solid particle formation Some examples of suitable spray-drying methods suitable for use with the present catalyst composition include those disclosed in US-A-5,290,745, US-A-5,652,314, US-A-4,376,062, US-A-4,728,705, US-A-5,604,172, US-A-5,306,350, US-A-4,638,029, US-A-5,716,558 and US20070060725.

By adjusting the speed of the atomizing wheel and the size of the orifices of the atomizer, employed during spray-drying, it is possible to obtain particles having desired average particle size, for example, from 5-200 $\mu$m. By adjusting the composition of the feed to the atomizer, the solidity of the catalyst particles (that is, internal void volume) is affected, which will also affect the final polymer bulk density. Proper control of both the atomization conditions and the feedstock composition results in catalyst precursor particles that have narrow size distributions, low span values, and produce resins with high bulk density.

The preferred precursor composition will have the formula (as moles) $Mg_xTiHf_yZr_z$, where x is from 1 to 20, y is from 0 to 10 and z is from 0 to 10, with the proviso that y + z is always > 0. Particularly preferred ranges are as follows: x from 3 to 10, y from 0 to 2, and z from 0 to 2.

Impregnation may be performed using the techniques disclosed in US5068489 and references therein.

Once formed, the catalyst precursor (the composition containing the Mg/Ti/Hf/Zr) is halogenated, preferably with an alkyl aluminum chloride ($AlR_{3-x}Cl_x$, where x is from 1 to 2), or boron chlorides (i.e. $RBCl_2$ or $BCl_3$). The time, temperature and concentration of halogenation agent all can affect the ultimate catalyst responses and productivity. As mentioned previously, the resultant catalyst product after halogenation may be washed to remove reaction products or, preferably, used directly. A typical halogenation procedure is given below.

Dried mineral oil is charged to a clean mix vessel, in an amount sufficient to produce a smooth slurry with the catalyst precursor powder, typically aiming at a 20 to 35 percent by weight slurry.

Once the powder is dispersed, the halogenation agent is added. The material is added at a rate such that excessive reaction does not occur in the mix tank. The amount of material added depends on the desired level of precursor halogenation. Typically, gas will evolve from the reaction of the alkyl aluminum chloride (one of the preferred halogenating agents) with residual alcohol in the precursor powder.

Agitation is continued for a time sufficient to disperse the reactants. Then, if the temperature in the mix vessel is still lower than the desired final reaction temperature, heat is applied to reach that temperature, followed by a hold period at that temperature to complete reactions. Alternately, cooling can be applied at all steps if the halogenation temperature desired is lower than the temperature the reaction mixture would reach adiabatically. The catalyst is then discharged and stored under inert gas prior to use.

Another alternative procedure is suitable for use either with supported or spray dried precursor compositions. The halogenation steps are completed using a light hydrocarbon diluent, such as isopentane or hexane. The slurry may then either be filtered or decanted to remove the light hydrocarbon. Optionally, the filter cake may be washed to further remove any reaction products of the halogenation reaction. Finally, the halogenated precursor composition may either be dried to free flowing solid catalyst or again dispersed in a mineral oil diluent for slurry feed.

A further alternative halogenation procedure can use an in-line, essentially plug flow system, such as that described in US 6187866 or US6617405. In this embodiment, the catalyst precursor powder is first dispersed in a mineral oil, mixed with reactants, and pumped, in-line, into the polymerization reactor. Suitable heating and cooling methods are used to control the actual temperatures of the catalyst, and the time for reactions to proceed is provided as residence time zones (in practice, either small vessels with minimal back-mixing or extended lengths of tubing/piping). The catalyst is then pumped directly into the polymerization reactor.

The conditions used in the halogenation step (required to activate the catalyst precursor) also have an impact on the amount of high molecular weight fraction produced by the catalyst, the inherent polymerization activity of the catalyst at a standard set of conditions, and the final polymer particle size and polymer bulk density. Too high a concentration of halogenation agent can suppress the activity of the portion of the catalyst that gives a very high molecular weight tail, too little results in insufficient catalytic activity. Preferred levels of halogen to residual alkoxide functionality (this is meant to include both free alcohol remaining in the catalyst precursor particles, as well as alkoxides that may have either formed by reaction of transition metal components with the alcoholic solvent, or have been present as part of the transition metal component, and measured by dissolution of the precursor compound in an aqueous media, such that all alkoxides are converted to the precursor alcohols, and subsequent Gas Chromatographic determination) range from 0.5 to 4 moles of Cl contained in the halogenation agent/mole of alkoxide with a preferred range of 1 to 3.

Cocatalysts are those typical of Ziegler Catalysts, for example, trialkyl aluminum compounds and dialkylaluminum halides. Preferred cocatalysts include trimethylaluminum, triethylaluminum, tri-n-hexylaluminum and tri-iso-butylaluminum.

## Preferred Polymers

The preferred polymers are those in which the presence of a high molecular weight "tail" is advantageous, that is, resins designed for blow molding applications, pipe, blown films, and the like, where a higher degree of resin swell or melt strength is desired for efficient processing. The process is applicable to production of polymers that contain a measurable fraction of very high molecular weight species of molecular weight greater than $10^6$, with mass fraction greater than 1 percent by weight, preferably greater than 2 percent by weight, and more preferably greater than 4 percent by weight. Polymers obtainable by the process are described in a co-pending U.S. Provisional Application No. 61/017947.

## Polymerization

The catalyst composition may be used for any reaction for which Ziegler-Natta type polymerization catalysts are normally useful, especially suspension, solution, slurry and gas phase polymerizations of olefins. Such reactions can be carried out using known equipment and reaction conditions, and are not limited to any specific type of reaction system. Such polymerization can be conducted in a batch wise mode, a continuous mode, or any combination thereof. Generally, suitable olefin polymerization temperatures are in the range of from 0°C to 200°C, and polymerizations run at atmospheric pressure, subatmospheric pressure, or superatmospheric pressure.

Preferably, gas phase polymerization is employed, at superatmospheric pressure in the range from 7 kPa to 7 MPa (1psi to 1000 psi), and at temperatures in the range of from 30°C to 130°C, Stirred or fluidized bed gas phase reaction systems are particularly useful. A conventional gas phase, fluidized bed process is conducted by passing a stream, containing one or more olefin monomers, continuously through a fluidized bed reactor, under reaction conditions sufficient to polymerize the monomer(s), in the presence of an effective amount of catalyst composition, and an activating cocatalyst, and at a velocity sufficient to maintain a bed of solid particles in a suspended condition. A stream containing unreacted monomer is withdrawn from the reactor continuously, compressed, cooled, optionally fully or partially condensed as disclosed in U.S. Patent 4,543,399, U.S. Patent 4,588,790, U.S. Patent 5,552,749 and U.S. Patent 5,462,999, and recycled to the reactor. Product is withdrawn from the reactor, and make-up monomer is added to the recycle stream. In addition, a fluidization aid such as carbon black, silica, clay, or talc maybe used, as disclosed in U.S. Patent 4,994,534. Suitable gas phase reaction systems are also described in U.S. Patent 5,527,752

DEFINITIONS

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, melt index, is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this application. Numerical ranges have been recited, as discussed herein, in reference to density, melt index, weight percent of component and other properties.

The term "polymer" is used herein to indicate, a homopolymer, a copolymer, or a terpolymer. The term "polymer" as used herein includes interpolymers, such as, for example, those made by the copolymerization of ethylene with C3-C10 alpha olefins, or propylene with ethylene and/or C4-C10 alpha olefins.

The term "interpolymer," as used herein, refers to polymers prepared by the polymerization of at least two different types of monomers. The generic term interpolymer thus includes copolymers, employed to refer to polymers prepared from two different types of monomers, and the term also includes polymers prepared from more than two different types of monomers.

The term "olefin-based polymer," as used herein, refers to a polymer that comprises at least a majority mole percent olefin, for example, ethylene, or propylene, or the like, (based on total amount of polymerized monomer), and, optionally, one or more additional comonomers. As known in the art, the polymerized form of the olefin is present in the polymer.

The term "ethylene-based polymer," as used herein, refers to a polymer that comprises at least a majority mole percent ethylene (based on total amount of polymerized monomer), and, optionally, one or more additional comonomers.

The term "ethylene/$\alpha$-olefin interpolymer," as used herein, refers to an ethylene-based interpolymer that comprises at least a majority mole percent ethylene (based on total amount of polymerized monomer), an $\alpha$-olefin, and optionally, one or more additional comonomers.

The term "inert gas," as used herein, refers to any gas, inert to the catalyst and reactants at issue. Typically, such term refers to nitrogen and helium, but may also refer to unreactive aliphatic hydrocarbons.

The terms "static level" and "static pattern," as used herein, respectively refer to the static voltage in the reactor bed and the physical appearance of the static voltage trace.

TEST METHODS

### Density

Resin density was measured by the Archimedes displacement method, ASTM D 792-00, Method B, in isopropanol. Specimens were measured within one hour of molding, after conditioning in the isopropanol bath at 23°C, for 8 minutes, to achieve thermal equilibrium prior to measurement. The specimens were compression molded according to ASTM D-4703-00, Annex A, with a five minutes initial heating period at about 190°C, and a 15 °C/min cooling rate per Procedure C. The specimen was cooled to 45°C in the press, with continued cooling until "cool to the touch."

### Melt Flow Rate by Extrusion Plastomer

Melt flow rate measurements for the ethylene-based polymers were performed according to ASTM D-1238-04, Condition 190C/2.16 kg, Condition 190°C/5 kg and Condition 190°C/21.6 kg, which are known as $I_2$, $I_5$ and $I_{21}$, respectively. Melt flow rate is inversely proportional to the molecular weight of the polymer. Thus, the higher the molecular weight, the lower the melt flow rate, although the relationship is not linear. Melt Flow Ratio (MFR) is the ratio of melt flow rate ($I_{21}$) to melt flow rate ($I_2$), unless otherwise specified.

### Gel Permeation Chromatography (GPC)

Polymer molecular weight was characterized by high temperature triple detector gel permeation chromatography (3D-GPC). The chromatographic system consisted of a Waters (Milford, MA) 150°C high temperature chromatograph, equipped with a Precision Detectors (Amherst, MA) 2-angle laser light scattering detector, Model 2040, and a 4-capillary differential viscometer detector, Model 150R, from Viscotek (Houston, TX). The 15° angle of the light scattering detector was used for calculation purposes. Concentration was measured via an infra-red detector (IR4) from PolymerChar, Valencia, Spain.

Data collection was performed using Viscotek TriSEC software version 3 and a 4-channel Viscotek Data Manager DM400, The Carrier solvent was 1,2,4-trichlorobenzene (TCB). The system was equipped with an on-line solvent degas device from Polymer Laboratories. The carousel compartment was operated at 150°C, and the column compartment was operated at 1500C. The columns were four Polymer Laboratories Mixed-A 30 cm, 20 $\mu$m (micron) columns. The reference polymer solutions were prepared in TGB. The inventive and comparative samples were prepared in decalin. The samples were prepared at a concentration of 0.1 grams of polymer in 50 ml of solvent. The chromatographic solvent (TCB) and the sample preparation solvent (TCB or decalin) contained 200 ppm of butylated hydroxytoluene (BHT). Both solvent sources were nitrogen sparged. Polyethylene samples were stirred gently at 160°C for 4 hours. The injection volume was 200 $\mu$l, and the flow rate was 1.0 ml/minute.

The preferred column set is of 20 $\mu$m (micron) particle size and mixed" porosity gel to adequately separate the highest molecular weight fractions appropriate to the claims,

Calibration of the GPC column set was performed with 21 narrow molecular weight distribution polystyrene standards. The molecular weights of the standards ranged from 580 to 8,400,000 g/mol, and were arranged in 6 "cocktail" mixtures, with at least a decade of separation between individual molecular weights.

The polystyrene standard peak molecular weights were converted to polyethylene molecular weights using the following equation (as described in Williams and Ward, J. Polym. Sci., Polym. Let., 6, 621 (1968)):

$$M_{polyethylene} = A \times (M_{polystyrene})^B \quad (1A).$$

Where M is the molecular weight, A has a cited value of 0.4316, and B is equal to 1.0. An alternative value of A, herein referred to as "q" or as a "q factor", was experimentally determined to be 0.39. The best estimate of "q" was determined using the predetermined weight average molecular weight of a broad linear polyethylene homopolymer (Mw ~ 115,000 g/mol, Mw/Mn ~ 3.0). Said weight average molecular weight was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The response factor, $K_{LS}$, of the laser detector was determined using the certificated value for the weight average molecular weight of NIST 1475 (52,000 g/mol). The method for obtaining the alternative "q factor" is described in more detail below.

A fourth order polynomial was used to fit the respective polyethylene-equivalent calibration points obtained from equation 1A to their observed elution volumes. The actual polynomial fit was obtained so as to relate the logarithm of polyethylene equivalent molecular weights to the observed elution volumes (and associated powers) for each polystyrene standard.

The total plate count of the GPC column set was performed with Eicosane (prepared at 0.04 g in 50 milliliters of TCB, and dissolved for 20 minutes with gentle agitation.) The plate count and symmetry were measured on a 200 microliter injection according to the following equations:

$$PlateCount = 5.54 * (RV \text{ at Peak Maximum} / (Peak \text{ width at } \tfrac{1}{2} \text{ height}))^2 \quad (2A),$$

where RV is the retention volume in milliliters, and the peak width is in milliliters.

$$Symmetry = (Rear \text{ peak width at one tenth height} - RV \text{ at Peak maximum}) / (RV \text{ at Peak}$$

$$Maximum - Front \text{ peak width at one tenth height}) \quad (3A),$$

where RV is the retention volume in milliliters, and the peak width is in milliliters.

The plate count for the chromatographic system (based on Eicosane as discussed previously) should be greater than 22,000, and symmetry should be between 1.00 and 1.12.

The Systematic Approach for the determination of each detector offset was implemented in a manner consistent with that published by Balke, Mourey, et. Al (Mourey and Balke, Chromatography Polym. Chpt 12, (1992)) (Balke, Thitiratsakul, Lew, Cheung, Mourey, Chromatography Polym. Chpt 13, (1992)), using data obtained from the three detectors while analyzing the broad linear polyethylene homopolymer (115,000 g/mol) and the narrow polystyrene standards. The Systematic Approach was used to optimize each detector offset to give molecular weight results as close as possible to those observed using the conventional GPC method. The overall injected concentration, used for the determinations of the molecular weight and intrinsic viscosity, was obtained from the sample infra-red area, and the infra-red detector calibration (or mass constant) from the linear polyethylene homopolymer of 115,000 g/mol. The chromatographic concentrations were assumed low enough to eliminate addressing 2nd Virial coefficient effects (concentration effects on molecular weight).

The calculations of Mn, Mw, and Mz based on GPC results using the IR4 detector (Conventional GPC) and the narrow standards calibration were determined from the following equations:

$$\overline{Mn} = \frac{\sum^i IR_i}{\sum^i \left( \dfrac{IR_i}{M_{PE,i}} \right)} \quad (4A), \qquad \overline{Mw} = \frac{\sum^i \left( IR_i * M_{PE,i} \right)}{\sum^i IR_i} \quad (5A),$$

$$\overline{Mz} = \frac{\sum\limits^{i}\left(IR_i * M_{PE,i}^2\right)}{\sum\limits_{i}\left(IR_i * M_{PE,i}\right)} \quad (6A) \quad \text{and} \quad \overline{Mz+1} = \frac{\sum\limits^{i}\left(IR_i * M_{PE,i}^3\right)}{\sum\limits_{i}\left(IR_i * M_{PE,i}^2\right)} \quad (7A).$$

Where $IR_i$ and $M_{PE,i}$ are the IR baseline corrected response and conventional calibrated polyethylene molecular weight for the ith slice of the IR response, elution volume paired data set. The equations 4A, 5A, 6A, and 7A are calculated from polymers prepared in solutions of decalin.

The "q-factor" described previously was obtained by adjusting "q" or A is equation 1A until Mw, the weight average molecular weight calculated using equation 5A and the corresponding retention volume polynomial, agreed with the independently determined value of Mw obtained in accordance with Zimm for the broad linear polyethylene homopolymer (115,000 g/mol).

The weight percent of polymer fraction with molecular weights > $10^6$ g/mol was calculated by summing the baseline corrected IR responses, $IR_i$, for the elution volume slices whose calibrated molecular weights, $M_{PE,i}$, were greater than $10^6$ g/mole and expressing this partial sum as a fraction of the sum of all the baseline corrected IR responses from all elution volume slices. A similar method was used to calculate the weight percentage of polymer fractions with absolute molecular weights > $10^6$ and $10^7$ g/mol. The absolute molecular weight was calculated use the 15° laser light scattering signal and the IR concentration detector, $M_{PE,I, abs}=K_{LS}*(LS_i)/(IR_i)$, using the same $K_{LS}$ calibration constant as in equation 8A. The paired data set of the $i^{th}$ slice of the IR response and LS response was adjusted using the determined off-set as discussed in the Systematic Approach.

In addition to the above calculations, a set of alternative Mw, Mz and $M_{Z+1}$ [Mw (abs), Mz (abs), Mz (BB) and $M_{Z+1}$ (BB)] values were also calculated with the method proposed by Yau and Gillespie,(Yau and Gillespie, Polymer, 42, 8947-8958 (2001)), and determined from the following equations:

$$\overline{Mw}(abs) = K_{LS} * \frac{\sum\limits^{i}(LS_i)}{\sum\limits_{i}(IR_i)} \quad (8A),$$

where, $K_{LS}$ = LS-MW calibration constant. As explained before, the response factor, $K_{LS}$, of the laser detector was determined using the certificated value for the weight average molecular weight of NIST 1475 (52,000 g/mol).

$$\overline{Mz}(abs) = \frac{\sum\limits^{i} IR_i * (LS_i / IR_i)^2}{\sum\limits_{i} IR_i * (LS_i / IR_i)} \quad (9A),$$

$$\overline{Mz}(BB) = \frac{\sum\limits^{i}(LS_i * M_{PE,i})}{\sum\limits_{i}(LS_i)} \quad (10A) \quad \text{and} \quad \overline{M_{Z+1}}(BB) = \frac{\sum\limits^{i}\left(LS_i * M_{PE,i}^2\right)}{\sum\limits_{i}(LS_i * M_{PE,i})} \quad (11A),$$

where $LS_i$ is the 15 degree LS signal, and the $M_{PE,i}$ uses equation 1A, and the LS detector alignment is as described previously.

In order to monitor the deviations over time, which may contain an elution component (caused by chromatographic changes) and a flow rate component (caused by pump changes), a late eluting narrow peak is generally used as a "flow rate marker peak." A flow rate marker was therefore established based on a decane flow marker dissolved in the eluting sample prepared in TCB. This flow rate marker was used to linearly correct the flow rate for all samples by alignment of the decane peaks. For samples dissolved in decalin, the decalin solvent gave a huge spike in the elution curve which overflowed the IR-4 detector therefore no decane peak can be used as flow rate marker. In order to minimize the effect caused by flow rate change, the flow characteristics of the linear polyethylene homopolymer (115,000 g/mol) prepared in TCB with decane as the flow rate marker was used as the same flow characteristics for solution samples prepared in decalin run on the same carousal.

EXPERIMENTAL

The following examples are to illustrate this invention and to not limit it.

*Preparation of Continuity Aid Mixture*

To 800 grams of deaerated mineral oil (Kaydol, available from Crompton) were added 100 grams of aluminum distearate (solid) and 100 grams of a commercially available form of an ethoxylated stearyl amine, AS-990 (solid). Both compounds were previously vacuum dried for 24 hours under nitrogen. The resulting slurry was used as is.

*Catalyst Preparation:*

Catalyst precursor was prepared by dissolving the transition metal components and magnesium compound in an alcoholic solvent. A typical formulation can be prepared by spray drying. The term "target metal ratios" refers to x, y and z above. Thus, a catalyst described as 5/1/1/0, will have molar ratios of metals: 5 moles of Mg, 1 mole of Ti, 1 mole of Hf and no Zr.

Examples of some catalyst preparations are shown in Table 1.

Table 1: Example Catalyst Preparations-Feedstock Compositions

|  | Catalyst Example 1 | Catalyst Example 2 | Catalyst Example 3 |
|---|---|---|---|
| Batch | 42 | 44 | 51 |
| Target Metal Ratios (mole) | 5/1/1/0 | 5/1/0.5/0.5 | 5/1/1/0 |
| Filler Type | Cabosil | Cabosil | Cabosil |
| Feedstock Composition |  |  |  |
| Ethanol. kg | 17.6 | 17.6 | 0 |
| Butanol, kg | 0 | 0 | 25 |
| MgCl2, kg | 0.883 | 0.886 | 1.3 |
| TiCl3 AA, kg (TiCl3)3AlCl3) | 0.358 | 0.358 | 0.53 |
| HfCl4. kg | 0.592 | 0.297 | 0.85 |
| ZrCl4, kg | 0 | 0.215 | 0 |
| Cabosil TS-610, kg | 1.3 | 1.3 | 1.8 |
| Total feedstock weight, kg | 20.7 | 20.7 | 29.5 |

The feedstock was then spray dried in a "1·2 metres (4 ft) diameter" NIRO spray dryer with an FS-10 atomizer wheel. The maximum atomizer wheel speed was 24,000 RPM. Spray dryer conditions are shown in Table 2. The dried precursor powder was then halogenation. A representative halogenation is provided below.

Table 2: Spray Dryer Conditions

|  | Cat. Ex. 1 | Cat. Ex. 2 | Cat. Ex. 3 |
|---|---|---|---|
| Inlet Temp, C | 165.3 | 163.9 | 163.3 |
| Outlet Temp, C | 101 →105 | 101 | 110 |
| Condenser Outlet, C | 5 | -1 -2 | -2 |
| Gas Flow, kg/hr (lb/hr) | 260 (574) | 264 (582) | 262 (577) |
| Feed Rate, kg/hr(lb/hr) | 14 (30) | 16 (36) | 15.7 (34.5) |
| Oxygen, ppm | 0 | 0 | 0 |
| Atomizer Speed % of Maximum | 95 | 95 | 70 |

(continued)

|  | Cat. Ex. 1 | Cat. Ex. 2 | Cat. Ex. 3 |
|---|---|---|---|
| Precursor Analysis | | | |
| mmole Mg/g | 2.21 | 2.33 | 2.06 |
| mmole Ti/g | 0.43 | 0.43 | 0.42 |
| mmole Hf/g | 0.44 | 0.23 | 0.42 |
| mmole Zr/g | 0 | 0.21 | 0 |
| Mg/Ti | 5.14 | 5.42 | 4.90 |
| Mg/Hf | 5.02 | 10.13 | 4.90 |
| Mg/Zr | | 11.10 | |
| Wt% Residual Ethanol | 26.7 | 19.5 | 5.9 |
| Wt% Residual Butanol | | | 26.8 |
| D10 | 13.4 | 13.9 | 19.6 |
| D50 | 25.5 | 26.1 | 37.5 |
| D90 | 47.4 | 48.7 | 68.0 |
| Span | 1.33 | 1.33 | 1.3 |

*Exemplary Chlorination Procedure-Batch*

All operations took place under an inert gas blanket (nitrogen) containing less than 5ppm of moisture and oxygen.

To a clean mix vessel, was charged 2500 ml of dried mineral oil, and the temperature control was set at 20°C. The agitator was started at 50 percent of its maximum speed (~35 RPM). The precursor powder (typically 300 to 700 grams) was charged to the vessel, and the contents were stirred for 30 minutes to disperse the precursor.

The halogenation agent, ethylaluminum sesquichloride (EASC), was diluted to 50 percent by weight, in dry mineral oil, and charged per recipe over a roughly ten minute period, to prevent foaming due to ethane formation. The addition was stopped, if excessive foaming occurred, or if the temperature increased above the desired final reaction temperature. The addition was resumed after foaming subsided, and the temperature decreased to less than the desired final reaction temperature. Excessive temperature increase was defined as within 5C° of the desired final reaction temperature. Thus, if final temperature aim was 35°C and internal temperature reached 30°C, addition was stopped while the mixture cooled.

The mixture was agitated for another 60 minutes, and the temperature was increased to the final reaction temperature (as shown in the examples) during this time. The catalyst was then ready for use, and stored under nitrogen blanket prior to use.

*Preparation of Catalyst 4*

Catalyst precursor analyses are shown in Table 3.

Table 3 Precursor Analysis (Catalyst Preparation for Polymerization Examples 1-3)

|  | Ti mm/g | Mg mm/g | Hf mm/gr | Cl mm/gr | Ethanol wt % | Cl/OEth | EASC gr/gr |
|---|---|---|---|---|---|---|---|
| Catalyst Example 4 | 0.494 | 2.3 | 0.48 | 6.62 | 22.5 | 2 | 0.806 |

Spray drying conditions were essentially the same as those used in Catalyst Example 1, with the exception that the atomizer speed was 90 percent of maximum. The spray dried precursor was reacted with 2.0 moles of Cl per mole of ethoxide or total alkoxide measured in the catalyst. The Cl source was Ethylaluminum Sesquichloride (EASC).
Mass Balance-Slurry Ti Content (as slurry) = 0.0804 mm/gram
Mass Balance Al/Ti Ratio = 13.2

The final reaction temperature was 35°C, and the reaction mixture was maintained at this temperature for 60 minutes. The EASC solution was charged over a period of 45 minutes. Ethane formed by reaction of ethyl aluminum groups with ethoxide was periodically vented. The catalyst was then used as prepared.

*Polymerization*

A standard gas phase fluidized bed reactor was used for all experiments, the same as that described in U.S. Patent 6,187,866.

Polymerization Example 1 (Comparative)

The reactor was started using a pre-dried seed bed, in accordance with the following procedure. The reactor was a gas phase, fluidized bed is described in U.S. Patent 6,187,866 and US 6,617,405.

The reactor was pre-dried with nitrogen purge to less than 20 ppmv water. Then approximately 54.4 kg (120 pounds) of seed bed (the gas phase reactor is pre-charged with a granular "seed" bed prior to startup to facilitate catalyst dispersion) was charged to the reactor. The polyethylene seed bed had been produced using a UCAT G-500 catalyst (available from Univation Technologies) and had a I21 of ~ 30 and a density of 0.950 g/cc.

The reactor was dried at low pressure, until the moisture was below 10 ppm using a 90°C jacket temperature on the heat exchanger. The reactor was pressurized with $N_2$ to 1.05 MPa (150 psi). The trisiobutylaluminum (TIBA) (1400 cc; 2.5 wt% in isopentane solvent) was charged over a one hour period, and circulated for an additional one hour (total of two hours), at 90°C and 1.05 MPa gauge (150 psig), with the vent closed. The reactor was blow down to 0.07 MPa gauge (10 psig), and pressure purged two times with high pressure nitrogen. An additional 600 cc of 2.5 wt% TIBA (all at once) was added into the reactor, and the reactor was brought to polymerization conditions as follows (C6 = 1-hexene, C2 = ethylene).

| | |
|---|---|
| Temperature | 80°C |
| C6/C2 molar ratio | 0.04 |
| H2/C2 molar ratio | 0.08 |
| Ethylene partial pressure | 0·7 MPa (100 psi) |
| Induced Condensing Agent | Isopentane at 10-16 mol% |
| Pressure | 2·1 MPa gauge (300 psig) |
| Continuity Aid Feed | 0 cc/hr |
| Cocatalyst feed | 150 cc/hr 2.5 % TIBA |
| Catalyst Feed (catalyst 4) | 4-5 cc/hour |

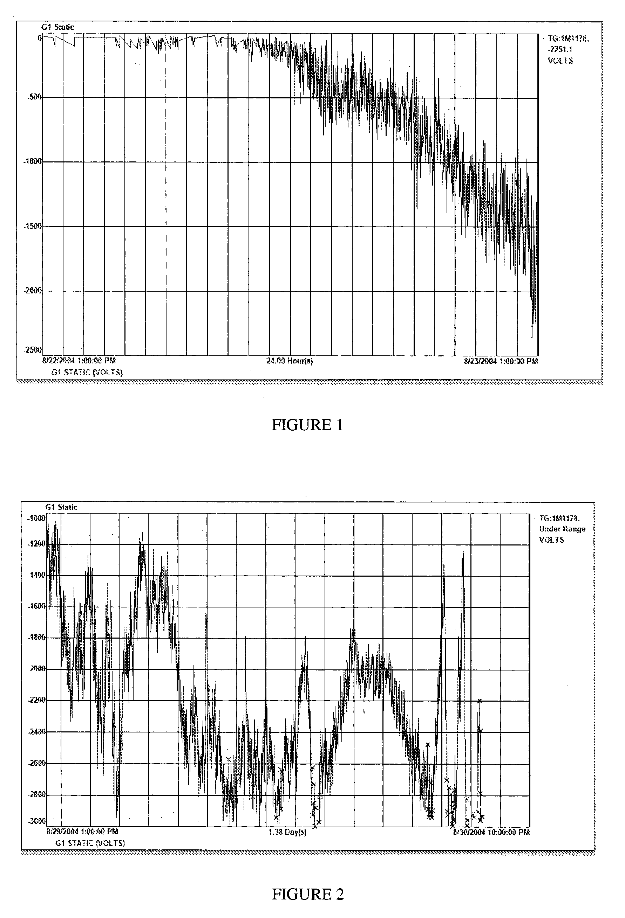

The polymerization was initiated within two hours of starting catalyst feed, and slowly increased to the desired level of 13·6 to 15·9 kg/hour (30 to 35 pounds/hour). The reaction conditions are given in the Table 4. Once the reaction was stable, it was observed that the absolute level of static voltage was increasing steadily as indicated in Figure 1. Sheeting and shutdown due to blockage of the product discharge system occurred less than 24 hours after the high level of static was observed. Product properties are shown in Table 5.

Table 4: Reaction Conditions- Polymerization Example 1

| | |
|---|---|
| Temperature | 80 |
| H2/C2 Ratio | 0.087 |
| C6/C2 Ratio | 0.036 |
| C2 Partial Pressure | 100 |
| Cocatalyst Feed | 145 cc/hr (2.5 wt% TIBA) |
| Catalyst Feed | 5.0 cc/hr |
| Isopentane mol% | 10.3 |

Table 5: Product Properties - Polymerization Example 1

| | |
|---|---|
| I21 (Flow Index) | 1.23 dg/min |
| Density | 0.9337 gr/cc |

(continued)

| Bulk Density | 355.6 kg/m$^3$ (22.2 lb/ft3) |
|---|---|
| Particle Size | 0.097 cm (0.038 inch) |
| Fines | < 0.4 wt% |
| Ti ppmw | 2.2 |
| Al/Ti | 59.6 |

Polymerization Example 2 Comparative)

The reactor was restarted using a similar procedure as discussed above. Conditions were the same as above, with the exception that the ethylene partial pressure was initially set at 0·53 MPa (75 psi), and slowly lowered to 0·21 MPa (30 psi), after the reaction was established. The isopentane concentration was maintained at 15-16 mole percent Catalyst feed was started at 4.0 cc/hour, and reaction was observed within one hour of commencement of catalyst feed. Reaction conditions were adjusted to produce polymer meeting specification requirements. Reaction conditions are shown in Table 6, and product properties are shown in Table 7.
Static was observed to increase to high levels, and reactor shutdown occurred due to blocked product discharge system, within 12 hours of the high static level. This result is shown in Figure 2.
Static, especially when negative at levels of less than -1000 volts, generally lead to sheeting. In this case, values below -3000 were encountered (the range of the probe was +3000 to -3000 volts).

Table 6: Reaction Conditions - Polymerization Example 2

| Temperature | 80 |
|---|---|
| H2/C2 Ratio | 0.069 |
| C6/C2 Ratio | 0.039 |
| C2 Partial Pressure | 30 |
| Cocatalyst Feed | 143 cc/hr (2.5 wt% TiBA) |
| Catalyst Feed | 9.0 cc/hr |
| Isopentane mol% | 18.9 |

Table 7: Product Properties - Polymerization Example 2

| I21 (Flow Index) | 0.48 dg/min |
|---|---|
| Density | 0.9242 gr/cc |
| Bulk Density | 338.0 kg/m$^3$ (21.1 lb/ft3) |
| Particle Size | 0.07cm (0.028 inch) |
| Fines | 1.6 wt% |
| Ti ppmw | 3.8 |
| Al/Ti | 34 |

Polymerization Example 3 (Inventive)

The reactor was started using a procedure similar to that of Example 2. In this polymerization, Continuity Additive (CA consisting of 10 wt% Aluminum Distearate and 10 wt% AS-990 dispersed in mineral oil) (20 cc) was precharged to the startup bed of 45.4 kg (100 lbs) of seed bed, prior to the start of the catalyst feed. A variety of samples polymerized using differing reaction conditions and different cocatalysts were produced. Reaction conditions during operation are given in Table 8. Once the reactor was successfully started up, the CA feed was continued at a rate such that sheeting did not occur due to excessive static. CA feed was maintained at a rate such that ~35 to 70 ppm, by weight based on polymerization rate, was maintained in the fluidized bed. This level resulted in smooth operation.

Table 8: Polymerization Conditions and Resin Properties

| Start Time | 11/28/2004 10:00 | 11/29/2004 4:00 | 11/30/2004 1:00 | 12/1/2004 4:00 |
|---|---|---|---|---|
| End Time (Drm. Collected) | 11/28/2004 16:00 | 11/29/2004 10:00 | 11/30/2004 10:00 | 12/1/2004 10:00 |
| Polymerization | 3(1) | 3(2) | 3(3) | 3(4) |
| Catalyst | 4 | 4 | 4 | 4 |
| REACTION CONDITIONS | Averages | Averages | Averages | Averages |
| Temp. °C | 95.0 | 105.0 | 105.0 | 95.0 |
| C2 Part. Pressure, MPa(psi) | 1·049 (149.8) | 1·053 (150.4) | 1·049 (149.9) | 1·051 (150.2) |
| H2/C2 Molar Ratio | 0.497 | 0.492 | 0.496 | 0.250 |
| C6/C2 Molar Ratio | 0.010 | 0.010 | 0.010 | 0.009 |
| Ethylene Mol% | 40.52 | 40.96 | 40.83 | 40.95 |
| Alkyl Feed | 144.8 | 147.1 | 98.8 | 87.2 |
| Isopentane Mol% | 13.8 | 13.8 | 13.7 | 15.8 |
| Nitrogen Mol% | 26.2 | 26.5 | 26.0 | 33.5 |
| Cat cc/hr | 8.0 | 6.5 | 6.5 | 7.5 |
| Continuity Aid cc/hr | 4.0 | 4.0 | 4.0 | 4.0 |
| Mass Balance Prod Rate | 28.2 | 32.5 | 35.2 | 33.7 |
| Bed Weight, kg (lbs) | 44·0 (97.0) | 43·9 (96.8) | 44·1 (97.3) | 44·0 (97.0) |
| Residence Time, hr | 3.44 | 2.98 | 2.76 | 2.88 |
| SGV ((m/sec) (ft/sec)) | 0·579 (1.9) | 0·579 (1.9) | 0·549 (1.8) | 0·549 (1.8) |
| Cocatalyst | TIBA (2.5 %) | TIBA (2.5 %) | TEAL (2.5%) | TEAL (2.5%) |
| RESIN PROPERTIES | | | | |
| Flow Index, dg/min I21 | 159.162 | 277.383 | 444.761 | 39.781 |
| Melt Index, dg/min I2 | 4.257 | 8.408 | 12.228 | 0.885 |
| Melt Index I5 | 14.161 | 26.627 | 39.257 | 3.250 |
| Density, g/cm3 | 0.9548 | 0.9544 | 0.9549 | 0.9504 |
| I21/I5 | 11.2 | 10.4 | 11.3 | 12.2 |
| I21/I2=MFR | 37.397 | 33.000 | 36.346 | 44.890 |
| Titanium, ppmw | 2.1 | 1.7 | 1.5 | 1.7 |
| Aluminum ppmw | 43.5 | 37.0 | 20.0 | 34.5 |
| Al/Ti | 37.3 | 39.6 | 24.3 | 36.0 |
| Al/Ti from Alkyl Feed | 24.2 | 26.4 | 11.2 | 22.8 |
| Bulk density, kg/m3(lb/ft3) | 418·1 (26.1) | 461·3 (28.8) | 466·1 (29.1) | 389·2 (24.3) |
| APS, mm(inches) | 0·889 (0.035) | 0·787 (0.031) | 0·737 (0.029) | 0·940 (0.037) |
| Fines, Wt% LT 120 Mesh | 0.8 | 2.0 | 2.2 | 1.0 |
| 10 Mesh % | 4.3 | 4.2 | 2.8 | 4.8 |
| 18 Mesh % | 29.1 | 18.5 | 17.1 | 29.7 |
| 35 Mesh % | 40.2 | 44.4 | 43.0 | 42.1 |
| 60 Mesh % | 20.6 | 23.7 | 26.6 | 18.1 |
| 120 Mesh % | 4.9 | 7.1 | 8.4 | 4.2 |
| 200 Mesh % | 0.8 | 1.6 | 1.6 | 0.8 |
| Pan % | 0.0 | 0.5 | 0.5 | 0.2 |

Table 8 Continued: Polymerization Conditions and Resin Properties

| Start Time | 12/2/2004 10:00 | 12/3/2004 4:00 | 12/3/2004 16:00 |
|---|---|---|---|
| End Time (Drm. Collected) | 12/2/2004 22:00 | 12/3/2004 8:00 | 12/3/2004 22:00 |
| Polymerization | 3(5) | 3(6) | 3(7) |
| Catalyst | 4 | 4 | 4 |
| REACTION CONDITIONS | Averages | Averages | Averages |
| Temp. °C | 89.9 | 85.0 | 85.0 |
| C2 Part. Pressure, MPa(psi) | 1.051 (150.1) | 1.0514 (150.2) | 1.052 (150.3) |
| H2/C2 Molar Ratio | 0.338 | 0.336 | 0.497 |
| C6/C2 Molar Ratio | 0.009 | 0.008 | 0.008 |
| Ethylene Mol% | 40.75 | 40.96 | 40.89 |
| Alkyl Feed | 104.5 | 72.9 | 64.1 |
| Isopentane Mol% | 14.6 | 15.1 | 13.1 |
| Nitrogen Mol% | 31.6 | 31.0 | 26.4 |
| Cat cc/hr | 8.5 | 9.5 | 9.5 |
| Continuity Aid cc/hr | 4.0 | 5.0 | 5.0 |
| Mass Balance Prod Rate | 33.5 | 33.0 | 35.6 |
| Bed Weight, kg (lbs) | 44.1 (97.3) | 44.0 (97.1) | 45.9 (101.2) |
| Residence Time, hr | 2.90 | 2.94 | 2.85 |
| SGV ((m/sec) (ft/sec)) | 0.549 (1.8) | 0.579 (1.9) | 0.549 (1.8) |
| Cocatalyst | TEAL (2.5%) | TEAL (2.5%) | TEAL (2.5%) |
| RESIN PROPERTIES | | | |
| Flow Index, dg/min I21 | 44.122 | 18.422 | 29.550 |
| Melt Index, dg/min I2 | 0.877 | 0.320 | 0.545 |
| Melt Index I5 | 3.250 | 1.244 | 2.095 |
| Density, g/cm3 | 0.9517 | 0.9492 | 0.9520 |
| I21/I5 | 13.6 | 14.8 | 14.1 |
| I21/I2=MFR | 50.287 | 57.488 | 54.220 |
| Titanium, ppmw | 2.2 | 2.7 | 3.2 |
| Aluminum ppmw | 57.0 | 46.5 | 55.0 |
| Al/Ti | 46.4 | 31.1 | 30.7 |
| Al/Ti from Alkyl Feed | 33.2 | 17.9 | 17.6 |
| Bulk density, kg/m3(lb/ft3) | 368.4 (23.0) | 358.8 (22.4) | 382.8 (23.9) |
| APS, mm(inches) | 1.067 (0.042) | 1.118 (0.044) | 1.194 (0.047) |
| Fines, Wt% LT 120 Mesh | 0.9 | 0.7 | 0.9 |
| 10 Mesh % | 9.9 | 11.9 | 16.8 |
| 18 Mesh % | 31.2 | 33.5 | 30.0 |
| 35 Mesh % | 38.4 | 34.7 | 31.8 |
| 60 Mesh % | 15.5 | 15.4 | 16.2 |
| 120 Mesh % | 4.0 | 3.7 | 4.3 |
| 200 Mesh % | 0.7 | 0.7 | 0.7 |
| Pan % | 0.2 | 0.1 | 0.2 |

Table 8 Continued: Polymerization Conditions and Resin Properties

| Start Time | 12/6/2004 22:00 | 12/7/2004 22:00 | 12/8/2004 10:00 | 12/9/2004 13:00 | 12/10/2004 4:00 |
|---|---|---|---|---|---|
| End Time (Drm. Collected) | 12/7/2004 7:00 | 12/8/2004 3:00 | 12/8/2004 19:00 | 12/9/2004 16:00 | 12/10/2004 10:00 |
| Polymerization | 3(8) | 3(9) | 3(10) | 3(11) | 3(12) |
| Catalyst | 4 | 4 | 4 | 4 | 4 |
| REACTION CONDITIONS | Averages | Averages | Averages | Averages | Averages |
| Temp. °C | 95.0 | 90.0 | 85.0 | 85.0 | 85.0 |
| C2 Part. Pressure, MPa(psi) | 1·049 (149.9) | 1·052 (150.3) | 1·051 (150.2) | 0·699 (99.8) | 0·349 (49.8) |
| H2/C2 Molar Ratio | 0.300 | 0.401 | 0.500 | 0.070 | 0.061 |
| C6/C2 Molar Ratio | 0.008 | 0.008 | 0.008 | 0.040 | 0.041 |
| Ethylene Mol% | 40.32 | 40.21 | 40.26 | 26.92 | 13.44 |
| Alkyl Feed | 93.9 | 100.5 | 115.0 | 79.9 | 96.7 |
| Isopentane Mol% | 15.9 | 14.7 | 13.6 | 13.8 | 15.2 |
| Nitrogen Mol% | 32.1 | 29.6 | 27.3 | 56.3 | 69.3 |
| Cat cc/hr | 7.0 | 8.5 | 9.5 | 4.5 | 8.0 |
| Continuity Aid cc/hr | 5.0 | 5.0 | 5.0 | 5.0 | 5.0 |
| Mass Balance Prod Rate | 39.7 | 39.9 | 38.8 | 29.3 | 34.4 |
| Bed Weight, kg (lbs) | 39·96 (88.1) | 40·05 (88.3) | 39·64 (87.4) | 40·05 (88.3) | 40·05 (88.3) |
| Residence Time, hr | 2.22 | 2.21 | 2.25 | 3.01 | 2.56 |
| SGV ((m/sec) (ft/sec)) | 0·549 (1.8) | 0·549 (1.8) | 0·549 (1.8) | 0·579 (1.9) | 0·579 (1.9) |
| Cocatalyst | TnHAL (5%) | TnHAL(5%) | TnHAL(5%) | TnHAL (5%) | TnHAL (5%) |
| RESIN PROPERTIES | | | | | |
| Flow Index, dg/min I21 | 31.617 | 31.013 | 24.847 | 1.907 | 0.934 |
| Melt Index, dg/min I2 | 0.577 | 0.531 | 0.397 | | |
| Melt Index I5 | 2.200 | 2.142 | 1.556 | 0.122 | 0.047 |
| Density, g/cm3 | 0.951 | 0.952 | 0.951 | 0.932 | 0.927 |
| I21/I5 | 14.4 | 14.5 | 16.0 | 15.625 | 19.865 |
| I21/I2=MFR | 54.827 | 58.369 | 64.077 | 0.000 | 0.000 |
| Titanium, ppmw | 2.4 | 2.7 | 3.5 | 1.7 | 2.5 |
| Aluminum ppmw | 36.3 | 43.8 | 58.3 | 41.0 | 50.0 |
| Al/Ti | 26.9 | 28.4 | 29.3 | 42.7 | 35.5 |
| Al/Ti from Alkyl Feed | 13.7 | 15.3 | 16.1 | 29.5 | 22.3 |
| Bulk density, kg/m3(lb/ft3) | 442·1 (27.6) | 424·5 (26.5) | 427·7 (26.7) | 373·2 (23.3) | 374·8 (23.4) |
| APS, mm(inches) | 0·914 (0.036) | 0·864 (0.034) | 0·787 (0.031) | 0·889 (0.035) | 0·864 (0.034) |
| Fines, Wt% LT 120 Mesh | 0.9 | 1.3 | 1.3 | 1.2 | 1.4 |
| 10 Mesh % | 4.5 | 3.9 | 2.5 | 4.9 | 4.4 |
| 18 Mesh % | 29.4 | 25.1 | 19.8 | 28.2 | 26.3 |
| 35 Mesh % | 42.7 | 43.0 | 47.7 | 39.9 | 41.1 |
| 60 Mesh % | 18.2 | 20.8 | 22.1 | 19.8 | 20.5 |
| 120 Mesh % | 4.3 | 5.9 | 6.6 | 6.1 | 6.3 |
| 200 Mesh % | 0.4 | 0.9 | 1.0 | 1.0 | 1.2 |
| Pan % | 0.5 | 0.4 | 0.3 | 0.2 | 0.1 |

Table 8 Continued: Polymerization Conditions and Resin Properties

| Start Time | 12/11/2004 7:00 | 12/12/2004 10:00 |
|---|---|---|
| End Time (Drm. Collected) | 12/11/2004 19:00 | 12/12/2004 22:00 |
| Polymerization | 3(13) | 3(14) |
| Catalyst | 4 | 4 |
| REACTION CONDITIONS | Averages | Averages |
| Temp. °C | 85.0 | 85.0 |
| C2 Part. Pressure, MPa(psi) | 0.350 (50.1) | 0.35 (50.0) |
| H2/C2 Molar Ratio | 0.062 | 0.062 |
| C6/C2 Molar Ratio | 0.041 | 0.041 |
| Ethylene Mol% | 13.52 | 13.50 |
| Alkyl Feed | 113.4 | 116.8 |
| Isopentane Mol% | 9.8 | 9.0 |
| Nitrogen Mol% | 74.4 | 75.5 |
| Cat cc/hr | 10.0 | 10.0 |
| Continuity Aid cc/hr | 0.0 | 0.0 |
| Mass Balance Prod Rate | 32.8 | 29.0 |
| Bed Weight, kg (lbs) | 39.92 (88.0) | 38.87 (85.7) |
| Residence Time, hr | 2.68 | 2.95 |
| SGV ((m/sec) (ft/sec)) | 0.579 (1.9) | 0.549 (1.8) |
| Cocatalyst | TnHAL (5%) | TEAL (2.5%) |
| RESIN PROPERTIES | | |
| Flow Index, dg/min I21 | 0.610 | 1.331 |
| Melt Index, dg/min I2 | | |
| Melt Index I5 | 0.031 | 0.084 |
| Density, g/cm3 | 0.925 | 0.923 |
| I21/I5 | 20.000 | 15.864 |
| I21/I2=MFR | | |
| Titanium, ppmw | 3.6 | 4.4 |
| Aluminum ppmw | 67.7 | 92.7 |
| Al/Ti | 33.9 | 37.7 |
| Al/Ti from Alkyl Feed | 20.8 | 24.6 |
| Bulk density, kg/m³(lb/ft3) | 365·2 (22.8) | 333·2 (20.8) |
| APS, mm(inches) | | |
| Fines, Wt% LT 120 Mesh | 0.5 | 2.1 |
| 10 Mesh % | 2.5 | 1.6 |
| 18 Mesh % | 18.3 | 16.8 |
| 35 Mesh % | 49.7 | 49.4 |
| 60 Mesh % | 23.2 | 23.4 |
| 120 Mesh % | 5.8 | 6.6 |
| 200 Mesh % | 0.4 | 1.6 |
| Pan % | 0.1 | 0.5 |

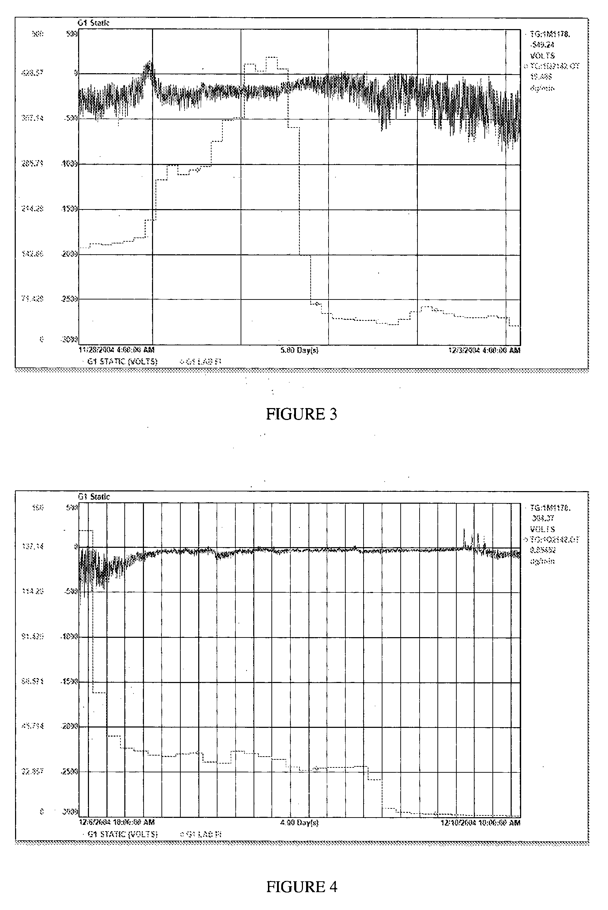

With the use of the Continuity Aid, stable operation was maintained. This is illustrated in Figure 3 (covers polymerizations 3(1) through 3(7)). Operation was normal with no shutdowns, and continued for 4½ days, without operational problems. The data in Table 8 covers the polymerization as depicted in Figure 3.

Polymerizations 3(1) to 3(4) illustrate control of MFR (I21/I2) by cocatalyst composition. Triisobutyl aluminum cocatalysts gives an unexpectedly narrower MFR (as measured by I21/I5 and I21/I2) in comparison to triethylaluminum.

Polymerizations 3(5) and 3(6) demonstrate the effect of aluminum concentration on MFR. In polymerization 3(7), the reaction conditions were adjusted to increase the melt flow of the polymer to more closely replicate Example 3 (5). Note that the MFR is still higher than the base case.

The effect of cocatalyst composition on MFR is observed by comparing polymerization 3(4) and 3(8). This MFR difference (45 vs. 55) is indicative of an increase in the high molecular weight portion of the resin produced by the catalyst. A similar result is seen in a comparison of polymerization 3(9) and polymerization 3(5).

The effect of cocatalyst type on resin properties and MFR is further observed by comparing polymerizations 3 (13) and 3(14). Depending on the properties desired, a simple change in cocatalyst can change the MRF of the resultant polymer, without requiring a catalyst change. This is of significant value in an industrial process, since changing cocatalyst (fed as a solution or as the neat aluminum alkyl) simply requires a change from one feed supply to another. Changing catalysts requires cessation of catalyst feed and loss of valuable production time.

A second set of samples was produced using TnHAL as cocatalyst. As can be seen in Figure 4 (covers polymerizations 3(8) through 3(12)), operation was maintained for a prolonged period through the use of the CA. Operational Data during this time period is also given in Table 8 (polymerizations 8 to 12). Finally, the CA was turned off, while producing low flow index polymer. Operation continued for approximately two days, and then the reactor was shut down and inspected. All surfaces were fouled with a less than 6.35 mm (0.25 inch) layer of polymer, which could only be removed by scraping or other mechanical methods. An exception was the thermocouples, static probes, and injection tubes, which were all heavily coated with a thick layer of polymer. Reactor operation would have ceased within a short time period, due to the port blockage by the product discharge, which was caused by the growing fouling. The importance of CA feed is demonstrated in the following example.

Polymerization Example 4(Inventive)

The reactor was operating using a catalyst prepared according to the method described earlier, with the following changes. Catalyst Example 3 precursor, as described above, was used. Ethanol was present, due to use of ethanol as solvent in the scrubber section of the spray dryer. The chlorination temperature was 50°C instead of 35°C. The Cl/ alkoxide mole ratio was 2.0, and the halogenation agent was ethyl aluminum sesquichloride.

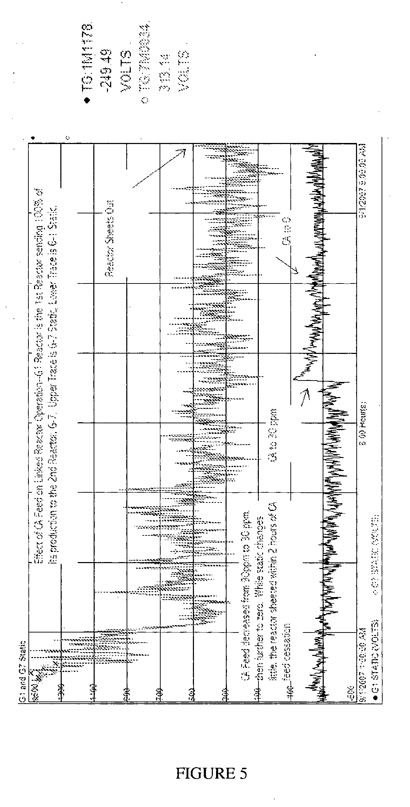

The reactor, which had been successfully started up using the techniques of Example 3, was operated at a temperature of 83°C, a hexene/ethylene mole ratio of 0.012, a hydrogen/ethylene mole ratio of 0.2, and an ethylene partial pressure of approximately 0.49MPa (70 psi). Isopentane induced condensing agent was present at approximately 22 mole percent in the cycle gas. Catalyst slurry was fed at a rate of approximately 9 to10 cc/hr, yielding a residual Ti level of 3.5 to 4 ppm. Triethylaluminum cocatalyst was fed at a rate of approximately 75 cc/hr, as a one percent solution in isopentane. Total reactor pressure was maintained at 2.1 MPa gauge (300 psig), The continuity aid feed was initially maintained at 6 cc/hr, then reduced in steps to 3.2 cc/hr, 2 cc/hr, and finally discontinued. The resin produced, had a flow index of 0.4 to 0.5 dg/min, and a density of 0.937 g/cc. The reactor sheeted less than five hours after discontinuation of CA feed. There was, however, no increase or decrease in static voltage during this time period. Figure 5 shows the effect of CA feed on linked reactor operation.

During this period of operation, the entire contents of the first reactor (G1) went into the second reactor (G7). CA was fed only into the first reactor. The notes on the Figure 5 depict when changes were made to the CA feed into the first of the two linked reactors. Thus, it is clear that the CA functions not only as an antistatic agent. The CA is a critical element for the production of the polymers as described herein. The catalysts useful in the invention also show a slow decay rate and narrow polymer particle size distribution.

Polymerization Example 5

The catalyst was prepared using the precursor composition of Catalyst Example 2, following the standard chlorination procedure given above. Chlorination was done using EASC at a final reaction temperature of 50°C for 60 minutes. The "chlorine to ethanol" mole ratio, as added to the solid precursor composition, was two.

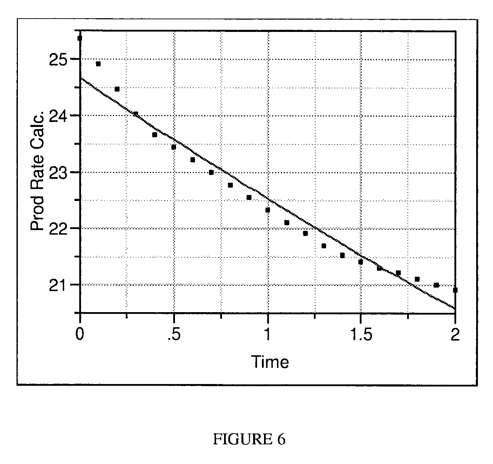

The reactor, which had been operating at steady state, was deliberately subjected to a discontinuation of catalyst feed. CA feed was maintained at a level sufficient to provide ~20 ppm of CA in the reactor. The reactor temperature was maintained at 84°C, the H2/C2 mole ratio was from 0.19 to 0.20, and the C6/C2 mole ratio was from 0.0065 to 0.0068. The ethylene partial pressure was maintained at approximately 0.41 to 0.43 MPa absolute (58 to 61 psia) The cocatalyst was TEAL, and isopentane was added to the reactor to maintain an inlet dew point from 74°C to 76°C. The initial Al/Ti ratio was approximately 50. Cocatalyst feed was continued, after catalyst feed ceased, at a rate that kept the total TEAL content in the reactor essentially constant at ~ 150 ppm. The production rate was calculated from an energy balance aground the polymerizing reactor. The decay constant was calculated using linear regression modeling, and determined to be < 0.1 Hr$^{-1}$. Figure 6 depicts the calculated production rate versus time. In Figure 6, the Log(Prod Rate Calc.) = 3.2053439 - 0.0906087 Time; the (Production Rate) = Constant*exp(-Kd*time); and Kd = ~0.09 Hr$^{-1}$. The constant is determined from a fitting tool, and allows the decay rate calculation.

Data used is given in Table 9. The Ethylene partial pressure is from analysis of the recycle gas composition. Inlet Dew Point and Production Rate are both calculated using standard thermodynamic models (dew point) and energy balance calculations know to those skilled in the art.

Table 9: Calculation of Catalyst Decav Rate

| Ethylene Partial Pressure MPa (PSI) | Production Rate from Energy Balance | Inlet Dew Point | Time (Hr) from catalyst off |
|---|---|---|---|
| 0.428 (61.09) | 29.47 | 74.96 | 0.00 |
| 0.427 (61.02) | 29.12 | 74.97 | 0.10 |
| 0.429 (61.23) | 28.77 | 74.98 | 0.20 |
| 0.4278 (61.12) | 28.42 | 74.99 | 0.30 |
| 0.4275 (61.07) | 28.05 | 75.01 | 0.40 |
| 0.4262 (60.89) | 27.60 | 75.02 | 0.50 |
| 0.4260 60.86) | 27.15 | 75.04 | 0.60 |
| 0.4240 (60.61) | 26.70 | 75.05 | 0.70 |
| 0.4261 (60.87) | 26.25 | 75.07 | 0.80 |
| 0.4253 (60.75) | 25.79 | 75.08 | 0.90 |
| 0.4248 (60.69) | 25.34 | 75.10 | 1.00 |
| 0.4283 (61.19) | 24.89 | 75.12 | 1.10 |
| 0.4255 (60.78) | 24.44 | 75.13 | 1.20 |
| 0.4260 (60.86) | 23.99 | 75.15 | 1.30 |
| 0.4255 (60.78) | 23.63 | 75.16 | 1.40 |
| 0.4234 (60.49) | 23.41 | 75.17 | 1.50 |
| 0.4241 (60.58) | 23.19 | 75.17 | 1.60 |
| 0.4248 (60.68) | 22.97 | 75.18 | 1.70 |
| 0.4241 (60.59) | 22.75 | 75.18 | 1.80 |
| 0.4243 (60.62) | 22.53 | 75.19 | 1.90 |
| 0.4255 (60.78) | 22.31 | 75.20 | 2.00 |
| 0.4244 (60.63) | 22.10 | 75.20 | 2.10 |
| 0.4234 (60.49) | 21.88 | 75.21 | 2.20 |
| 0.4234 (60.49) | 21.66 | 75.23 | 2.30 |
| 0.4232 (60.45) | 21.50 | 75.26 | 2.40 |
| 0.4240 (60.57) | 21.39 | 75.28 | 2.50 |
| 0.4242 (60.60) | 21.29 | 75.31 | 2.60 |
| 0.4244 (60.63) | 21.19 | 75.33 | 2.70 |
| 0.4256 (60.80) | 21.09 | 75.36 | 2.80 |
| 0.4228 (60.40) | 20.98 | 75.38 | 2.90 |
| 0.4220 (60.28) | 20.88 | 75.40 | 3.00 |

Polymerization Example 6 (Inventive)

Catalyst was produced from the precursor composition of catalyst Example 2. The final reaction temperature was 50°C for 60 minutes. Chlorination was done with EASC at a 2:1 "C1: ethoxide" molar ratio. Polymer, with extremely high bulk density and narrow particle size, was produced, without operational difficulty, while feeding CA. The reactor had been started up successfully, and the CA feed was maintained at a level sufficient to prevent sheeting/agglomerate formation, i.e. at a level of approximately 10 to 30 ppm in the bed. In this example, two reactors were linked, with all of the product from the first reactor being transferred into the second reactor. Catalyst was fed only to the first reactor. Polymerization conditions are given in Table 10.

Table 10: Polymerization Conditions

| Reactor 1 (G1) | Example 7 | Example 8 |
|---|---|---|
| I21 | 0.76 | 1.15 |
| DENSITY | 0.9412 | 0.9430 |
| D10 $\mu$m (Microns) | 105.1 | 119.25 |
| D50 $\mu$m (microns) | 226.4 | 267.03 |
| D90 $\mu$m (microns) | 544.7 | 607.53 |
| Span | 1.9 | 1.83 |
| Bulk Density kg/m$^3$ (lb/ft3) | 491.8 (30.7) | 454.6 (28.38) |
| G1 Ti ppm | 3.5 | 2.69 |
| G1 Al ppm | 77.50 | 43.40 |
| G1 Al/Ti | 38.84 | 28.68 |
| Reactor Temperature | 84.00 | 84.00 |
| H2/C2 | 0.2000 | 0.1593 |
| C6/C2 | 0.0065 | 0.0063 |
| C2 Partial Pressure MPa (PSI) | 0.38 (54.38) | 0.31 (44.72) |
| Calculated Rate pph | 34.92 | 34.75 |
| Static Volts | -223.50 | 128.87 |
| Cocatalyst | TEAL | TEAL |
| CA feed cc/hr | 2 | 2.12 |
| Catalyst Feed cc/hr | 11 | 5.3 |
| Reactor 2 (G7) | Example 7 | Example 8 |
| G7 Tr | 105.0 | 105 |
| G7 H2/C2 | 1.7290 | 1.79 |
| G7 C6/C2 | 0.0005 | 0.00 |
| G7 C2 MPa (PSI) G1 I | 0.61 (86.7) | 0.53 (75.81) |
| Calculated Rate pph | 28.0 | 28.54 |
| Split (calculated) | 0.55 | 0.55 |
| D10 $\mu$m (microns) | 115.73 | 138.71 |
| D50 $\mu$m (micron) | 259.96 | 314.63 |
| D90 $\mu$m (microns) | 607.21 | 678.93 |
| Span | 1.89 | 1.72 |
| Reactor 2 (G7) | Example 7 | Example 8 |
| I21/I2 | 139.93 | 127.70 |

(continued)

| Reactor 2 (G7) | Example 7 | Example 8 |
| --- | --- | --- |
| I2 gran | 0.19 | 0.33 |
| I21 gran | 26.47 | 41.80 |
| I5 Ext | 0.99 | 1.63 |
| I21/I5 , | 26.77 | 25.61 |
| Density | 0.9587 | 0.9614 |
| Bulk Density (kg/m$^3$)(lb/ft3) | 541.9 (33.83) | 518.7 (32.38) |
| Al ppm-final product | 33.88 | 24.78 |
| Ti ppm-final product | 1.87 | 1.42 |
| Al/Ti | 32.11 | 29.80 |
| G-7 Static (30 min avg) | 267.22 | -246.12 |
| Cocatalyst 2.5 wt% TEAL cc/hr | 164.58 | 87 |
| Energy Balance Hourly Rate | 63.11 | 63.27 |
| Mass Balance Hourly rate | 62.83 | 61.47 |
| Ratio MB/EB | 1.00 | 0.97 |
| Al ppm from Catalyst by Mass Balance | 16.44 | 12.49 |

Polymerization Example 7 (Inventive)

Precursor from Catalyst Example 1 was converted into catalyst. An alternative procedure was used. The precursor powder was first dispersed in isopentane, then EASC was added at a 2.0 "Cl to ethoxide" molar ratio. The slurry was mixed at 35°C for one hour, and then the solids allowed to settle. The supernatant liquid was decanted, an additional volume of isopentane was added, and the step repeated two additional times. Hydrobrite 380 mineral oil was then added to produce a slurry of halogenated catalyst precursor. Vacuum was drawn on the slurry for approximately one hour to evaporate additional isopentane prior to use.

This catalyst was then utilized on a reactor running at conditions essentially the same as those given in Example 6. The reactor was running at steady state prior to addition of the new catalyst. CA was present in the fluidized bed at an -20 ppm by weight level prior to catalyst change. Although washing of the catalyst resulted in higher catalyst activity, the use of CA was still required to prevent sheeting/chunking. When the CA feed was discontinued, the reactor sheeted within 12 hours.

Polymerization Example 8 (Comparative)

Catalyst was produced in the same fashion as Example 6. The CA feed was mixed directly with the catalyst feed at the injection point at the reactor, rather than in a separate feed location. Mixing time of the CA and catalyst streams was < 30 seconds. Catalyst activity was extremely poor, and the reactor sheeted in less than 2 hours of operation.

Polymerization Example 9 (Inventive)

The catalyst was prepared using the precursor composition of Catalyst Example 2, following the standard chlorination procedure given above. Chlorination was done using EASC at a final reaction temperature of 50°C for 60 minutes. The chlorine to ethanol mole ratio, as added to the solid precursor composition, was two.
The reactor was started up using the same procedure as in Example 1 with the following changes.
2000 cc of a 2.5 wt% triethylaluminum solution was charged to the reactor instead of triisobutyl aluminum.
The second addition of aluminum alkyl was omitted.
No Continuity Additive was pre-charged
The Continuity additive feed was begun simultaneously with the start of catalyst feed. The CA comprised 10 wt% aluminum distearate and 10 wt% AS-990 dispersed in mineral oil. CA feed was initially maintained at a flow rate of 0.4 cc/hr/cc of catalyst slurry feed, then gradually decreased to ~0.3 cc/hr/cc of catalyst feed. Catalyst feed was increased from 50% of that required to achieve the desired polymerization rate to 100% over a period of about 6 hours.

Reactor temperature was maintained at 84°C, the H2/C2 mole ratio was from 0.19 to 0.20, and then C6/C2 mole ratio was from 0.0065 to 0.0068. The ethylene partial pressure was maintained at approximately 0.41 mPa absolute to 0.43 MPa absolute (58 to 61 psia). The cocatalyst was TEAL, and isopentane was added to the reactor to maintain an inlet dew point of 74°C to 76°C. The final Ti residue was from 3 to 3.5 ppm, and the production rate averaged 13.6 to 15.9 kg/hour (30 to 35 pounds/hour.)

After the startup period was complete, the CA feed rate was slowly decreased such that the level in the fluidized bed was approximately 10 to 15 ppm. No sheeting or chunking incidents occurred.

Comparison of Different Trialkylaluminum Compounds

Polymerizations using different trialkylaluminum compounds are shown below in Tables 11 and 12. The CA feed was maintained at a level necessary to maintain measured static at an essentially neutral level. This value changes with the state of raw material purity and the molecular weight of the resin produced. The CA levels in the resin varied from ~10 ppm, to 30 ppm by weight.

Table 11: Polymerization Condition and Resin Properties

| Table 11: Polymerization Conditions and Resin Properties | | | | |
|---|---|---|---|---|
| Polymerization | A | B | C | D |
| Cocatalyst | TIBA | TIBA | TEAL | TEAL |
| Temp. °C | 95.0 | 105.0 | 105.0 | 95.0 |
| C2 Part. Pressure, MPa (psi) | 1.0486 (149.8) | 1.053 (150.4) | 1.0493 (149.9) | 1.05 (150.2) |
| H2/C2 Molar Ratio | 0.497 | 0.492 | 0.496 | 0.250 |
| C6/C2 Molar Ratio | 0.010 | 0.010 | 0.010 | 0.009 |
| RESIN PROPERTIES | | | | |
| Flow Index, dg/min I21 | 159.162 | 277.383 | 444.761 | 39.781 |
| Melt Index, dg/min I2 | 4.257 | 8.408 | 12.228 | 0.885 |
| Melt Index I5 | 14.161 | 26.627 | 39.257 | 3.250 |
| Density, g/cm3 | 0.9548 | 0.9544 | 0.9549 | 0.9504 |
| I21/I5 | 11.2 | 10.4 | 11.3 | 12.2 |
| I21/I2=MFR | 37.397 | 33.000 | 36.346 | 44.890 |
| Titanium, ppmw | 2.1 | 1.7 | 1.5 | 1.7 |
| Aluminum ppmw | 43.5 | 37.0 | 20.0 | 34.5 |
| Al/Ti from Alkyl Feed | 24.2 | 26.4 | 11.2 | 22.8 |
| Bulk Density, kg/m$^3$(lb/ft3) | 418.1 (26.1) | 461.3 (28.8) | 466.1 (29.1) | 389.2 (24.3) |
| APS cm, (inches) | 0.889 (0.035) | 0.787 (0.031) | 0.736 (0.029) | 0.940 (0.037) |
| Fines, Wt% LT 120 Mesh | 0.8 | 2.0 | 2.2 | 1.0 |

Table 12: Polymerization Conditions and Resin Properties

| Polymerization | E | F | G | H | I |
|---|---|---|---|---|---|
| Temp. °C | 95.0 | 90.0 | 85.0 | 85.0 | 85.0 |
| C2 Part. Pressure, MPa (psi) | 1.0493 (149.9) | 1.0521 (150.3) | 1.0514 (150.2) | 0.6986 (99.8) | 0.3486 (49.8) |
| H2/C2 Molar Ratio | 0.300 | 0.401 | 0.500 | 0.070 | 0.061 |
| C6/C2 Molar Ratio | 0.008 | 0.008 | 0.008 | 0.040 | 0.041 |

(continued)

| Polymerization | E | F | G | H | I |
|---|---|---|---|---|---|
| Cocatalyst | TnHAL | TnHAL | TnHAL | TnHAL | TnHAL |
| RESIN PROPERTIES | | | | | |
| Flow Index, dg/min I21 | 31.617 | 31.013 | 24.847 | 1.907 | 0.934 |
| Melt Index, dg/min 12 | 0.577 | 0.531 | 0.397 | ND | ND |
| Melt Index I5 | 2.200 | 2.142 | 1.556 | 0.122 | 0.047 |
| Density, g/cm3 | 0.951 | 0.952 | 0.951 | 0.932 | 0.927 |
| I21/I5 | 14.4 | 14.5 | 16.0 | 15.625 | 19.865 |
| I21/I2=MFR | 54.827 | 58.369 | 64.077 | ND | ND |
| Titanium, ppmw | 2.4 | 2.7 | 3.5 | 1.7 | 2.5 |
| Aluminum ppmw | 36.3 | 43.8 | 58.3 | 41.0 | 50.0 |
| Al/Ti | 26.9 | 28.4 | 29.3 | 42.7 | 35.5 |
| Al/Ti from Alkyl Feed | 13.7 | 15.3 | 16.1 | 29.5 | 22.3 |
| Bulk Density mm(lb/ft3) | 442.1 (27.6) | 424.5 (26.5) | 427.7 (26.7) | 373.2 (23.3) | 374.8 (23.4) |
| APS mm, (inches) | 0.9144 (0.036) | 0.8636 (0.034) | 0.7874 (0.031) | 0.889 (0.035) | 0.8636 (0.034) |
| Fines, Wt% LT 120 Mesh | 0.9 | 1.3 | 1.3 | 1.2 | 1.4 |

As shown in Examples B and C, the TEAL cocatalyst does give substantially better melt index response, however even at higher melt index, the MFR is higher indicating a broader MWD. Comparison of Example D and Example E further indicates the capability to increase MFR (or MWD) through cocatalyst changes.

**Claims**

1. A process for producing an olefin-based polymer, said process comprising polymerizing at least one monomer, in the gas phase, in the presence of at least the following components:

   A) at least one catalyst wherein the catalyst comprises mg, Ti, Hf and optionally Zr,metals and wherein each metal is present as a halogen;
   B) at least one cocatalyst;
   C) a composition comprising at least one compound selected from formula (I), and/or at least one compound selected from formula (II):

   $$(R1CO_2)_2 \, AlOH \qquad (I),$$

   $$(R2)_xN(R3OH)_y \qquad (II);$$

   wherein R1 is a hydrocarbon radical containing from 13 to 25 carbons;
   R2 is a hydrocarbon radical containing from 14 to 26 carbons;
   R3 is a hydrocarbon radical containing from 1 to 4 carbons; and
   $x + y = 3$, and x has a value of 1 or 2.

2. The process of Claim 1, wherein Component C is fed to the reactor separately from the catalyst and cocatalyst.

3. The process of any of the preceding claims, wherein Component C is a solid as fed to the reactor.

4. The process of any of the preceding claims, wherein the catalyst is produced by spray drying a solution comprising the active metals of the catalyst in an alcoholic solvent, and then subsequently halogenating the active metals.

**5.** The process of any of the preceding claims, wherein the olefin-based polymer is an ethylene-based polymer.

**6.** The process of Claim 5, wherein the ethylene-based polymer is an ethylene/α-olefin interpolymer.

**7.** The process of any of the preceding claims, wherein the composition of Component C further comprises a mineral oil.

**8.** The process of any of the preceding claims, wherein the composition of Component C consists of at leastone compound selected from formula (I), at least one compound selected from formula (II), and a mineral oil.

**9.** The process of any of the preceding claims, wherein the composition of Component C comprises of at least one compound selected from formula (I), and at least one compound selected from formula (II), and wherein the weight ratio of the compound selected from formula (I)" to the "compound selected from formula (II)" is about 1 to 1.

**Patentansprüche**

**1.** Ein Verfahren zum Herstellen eines Polymers auf Olefinbasis, wobei das Verfahren das Polymerisieren mindestens eines Monomers, in der Gasphase, in Anwesenheit von mindestens den folgenden Komponenten beinhaltet:

A) mindestens einem Katalysator, wobei der Katalysator Mg-, Ti-, Hf- und optional Zr-Metall beinhaltet und wobei jedes Metall als ein Halogen vorhanden ist;
B) mindestens einem Co-Katalysator;
C) einer Zusammensetzung, die mindestens eine Verbindung, die aus Formel (I) ausgewählt ist, und/oder mindestens eine Verbindung, die aus Formel (II) ausgewählt ist, beinhaltet:

$$(R1CO_2)_2AlOH \qquad (I),$$

$$(R2)_xN(R3OH)_y \qquad (II);$$

wobei R1 ein Kohlenwasserstoffradikal ist, das von 13 bis 25 Kohlenstoffe enthält;
R2 ein Kohlenwasserstoffradikal ist, das von 14 bis 26 Kohlenstoffe enthält;
R3 ein Kohlenwasserstoffradikal ist, das von 1 bis 4 Kohlenstoffe enthält; und
$x + y = 3$ und x einen Wert von 1 oder 2 aufweist.

**2.** Verfahren gemäß Anspruch 1, wobei Komponente C getrennt von dem Katalysator und dem Co-Katalysator in den Reaktor eingespeist wird.

**3.** Verfahren gemäß einem der vorhergehenden Ansprüche, wobei Komponente C beim Einspeisen in den Reaktor ein Feststoff ist.

**4.** Verfahren gemäß einem der vorhergehenden Ansprüche, wobei der Katalysator durch Sprühtrocknen einer Lösung, die die aktiven Metalle des Katalysators in einem alkoholischen Lösungsmittel beinhaltet, und dann anschließend Halogenieren der aktiven Metalle hergestellt wird.

**5.** Verfahren gemäß einem der vorhergehenden Ansprüche, wobei das Polymer auf Olefinbasis ein Polymer auf Ethylenbasis ist.

**6.** Verfahren gemäß Anspruch 5, wobei das Polymer auf Ethylenbasis ein Ethylen/α-Olefin-Interpolymer ist.

**7.** Verfahren gemäß einem der vorhergehenden Ansprüche, wobei die Zusammensetzung von Komponente C ferner ein Mineralöl beinhaltet.

**8.** Verfahren gemäß einem der vorhergehenden Ansprüche, wobei die Zusammensetzung von Komponente C aus mindestens einer Verbindung, die aus Formel (I) ausgewählt ist, mindestens einer Verbindung, die aus Formel (II) ausgewählt ist, und einem Mineralöl besteht.

**9.** Verfahren gemäß einem der vorhergehenden Ansprüche, wobei die Zusammensetzung von Komponente C mindestens eine Verbindung, die aus Formel (I) ausgewählt ist, und mindestens eine Verbindung, die aus Formel (II) ausgewählt ist, beinhaltet, und wobei das Gewichtsverhältnis der "Verbindung, die aus Formel (I) ausgewählt ist" zu der "Verbindung, die aus Formel (II) ausgewählt ist" etwa 1 zu 1 beträgt.

## Revendications

1. Un procédé pour produire un polymère à base d'oléfine, ledit procédé comprenant la polymérisation d'au moins un monomère, dans la phase gazeuse, en présence des composants suivants au moins :

   A) au moins un catalyseur, le catalyseur comprenant les métaux Mg, Ti, Hf et facultativement Zr, et dans lequel chaque métal est présent sous forme d'halogène ;
   B) au moins un co-catalyseur ;
   C) une composition comprenant au moins un composé choisi à partir de la formule (I), et/ou au moins un composé choisi à partir de la formule II) :

   $$(R1CO_2)_2AlOH \qquad (I),$$

   $$(R2)_xN(R3OH)_y \qquad (II) \; ;$$

   dans lesquelles R1 est un radical hydrocarbure contenant de 13 à 25 carbones ;
   R2 est un radical hydrocarbure contenant de 14 à 26 carbones ;
   R3 est un radical hydrocarbure contenant de 1 à 4 carbones ; et
   x+y=3, et x a une valeur de 1 ou 2.

2. Le procédé de la revendication 1, dans lequel le Composant C est amené dans le réacteur séparément du catalyseur et du co-catalyseur.

3. Le procédé de n'importe lesquelles des revendications précédentes, dans lequel le Composant C est un solide lorsqu'il est amené dans le réacteur.

4. Le procédé de n'importe lesquelles des revendications précédentes, dans lequel le catalyseur est produit par séchage par atomisation d'une solution comprenant les métaux actifs du catalyseur dans un solvant alcoolique, puis par halogénation subséquente des métaux actifs.

5. Le procédé de n'importe lesquelles des revendications précédentes, dans lequel le polymère à base d'oléfine est un polymère à base d'éthylène.

6. Le procédé de la revendication 5, dans lequel le polymère à base d'éthylène est un interpolymère éthylène/$\alpha$-oléfine.

7. Le procédé de n'importe lesquelles des revendications précédentes, dans lequel la composition du Composant C comprend de plus une huile minérale.

8. Le procédé de n'importe lesquelles des revendications précédentes, dans lequel la composition du Composant C consiste en au moins un composé choisi à partir de la formule (I), au moins un composé choisi à partir de la formule (II), et une huile minérale.

9. Le procédé de n'importe lesquelles des revendications précédentes, dans lequel la composition du Composant C comprend au moins un composé choisi à partir de la formule (I) et au moins un composé choisi à partir de la formule (II), et dans lequel le rapport pondéral du « composé choisi à partir de la formule (I) » au « composé choisi à partir de la formule (II) » est d'environ 1 pour 1.

FIGURE 1

FIGURE 2

FIGURE 3

FIGURE 4

FIGURE 5

FIGURE 6

36

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070073012 A
- EP 1082351 B1
- US 6111034 A
- US 6022935 A
- EP 803514 B1
- US 20020065374 A
- US 6359083 B
- US 5731392 A
- US 6548610 B
- US 20020103072 A
- EP 480434 A2
- US 4368305 A
- US 6054406 A
- US 7348383 B
- US 2005148742 A
- US 20070060725 A
- US 5290745 A
- US 5652314 A
- US 4376062 A
- US 4728705 A
- US 5604172 A
- US 5306350 A
- US 4638029 A
- US 5716558 A
- US 5068489 A
- US 6187866 B
- US 6617405 B
- US 61017947 A
- US 4543399 A
- US 4588790 A
- US 5552749 A
- US 5462999 A
- US 4994534 A
- US 5527752 A

### Non-patent literature cited in the description

- **WILLIAMS ; WARD.** *J. Polym. Sci., Polym. Let.,* 1968, vol. 6, 621
- **ZIMM, B.H.** *J.Chem. Phys.,* 1948, vol. 16, 1099
- **KRATOCHVIL, P.** Classical Light Scattering from Polymer Solutions. Elsevier, 1987
- **BALKE ; MOUREY.** Chromatography Polym. 1992
- **BALKE ; THITIRATSAKUL ; LEW ; CHEUNG ; MOUREY.** Chromatography Polym. 1992
- **YAU ; GILLESPIE.** *Polymer,* 2001, vol. 42, 8947-8958